# EUROPEAN PATENT APPLICATION

(11) **EP 4 160 526 A1**
(43) Date of publication of application: **05.04.2023**
(21) Application number: 21813575.4
(22) Date of filing: 14.05.2021
(51) Int. Cl.: G06T 7/00

(54) **INFORMATION PROCESSING DEVICE, INFORMATION PROCESSING METHOD, INFORMATION PROCESSING SYSTEM, AND PROGRAM**

(30) Priority: 27.05.2020 JP 2020091923
(71) Applicant: Sony Group Corporation, Minato-Ku, Tokyo, 108-0075 (JP)
(72) Inventor: YAMAMOTO Yuki, Tokyo 108-0075 (JP); WRIGHT Christopher, 1015 Lausanne (CH); ELLIOTT-BOWMAN Bernadette, 1015 Lausanne (CH); WALKER Nicholas, 1015 Lausanne (CH)
(74) Representative: Witte, Weller & Partner Patentanwälte mbB
(86) International application number: PCT/JP2021/018331
(87) International publication number: WO 2021/241260

(57) **Abstract**

The present disclosure relates to an information processing apparatus, an information processing method, an information processing system, and a program capable of appropriately evaluating an object recognition filter by simpler processing.

A generation unit that generates teacher data of a preprocessing filter provided in a preceding stage of the object recognition filter is generated by a cyclic generative adversarial network (Cylcic GAN) that is unsupervised learning. The teacher data generated by the generated generation unit is applied to the object recognition filter, an evaluation image is generated from a difference between object recognition result images, and an evaluation filter that generates an evaluation image from the evaluation image and the teacher data is generated. The evaluation filter is applied to an input image to generate an evaluation image, and the object recognition filter is evaluated by the generated evaluation image. The present disclosure can be applied to an object recognition device.

## Description

### TECHNICAL FIELD

The present disclosure relates to an information processing apparatus, an information processing method, an information processing system, and a program, and more particularly, to an information processing apparatus, an information processing method, an information processing system, and a program capable of appropriately evaluating a generation unit or a conversion unit obtained by learning with a simpler process.

### BACKGROUND ART

In recent years, machine learning represented by deep learning has been remarkably developed as an elemental technology constituting so-called artificial intelligence (AI), and is widely applied to fields such as image areas such as image classification, object detection, and segmentation, natural language processing, and voice recognition.

Among them, one of the technologies that have recently attracted attention is a generative adversarial network (hereinafter, referred to as GAN). The GAN is a type of generation model, and can generate non-existent data or convert data according to a feature of existing data by learning a feature from data.

The GAN attracts attention as a method of "unsupervised learning" that learns features without providing ground truth data.

More specifically, the GAN trains a neural network including a generation unit that generates realistic data or a conversion unit that converts data into realistic data, and a neural network including a determination unit that determines whether or not the generated or converted realistic data is real, by causing the neural networks to adversarially contest with each other.

However, in the GAN, since there are instability in learning and bias in generated data and it is difficult to perform prediction, it is known that it is necessary to manually adjust parameters and reconstruct a network by repeating trial and error in order to realize complete learning.

Therefore, a technology has been proposed in which an unsupervised determination unit calculates a latent feature representation of an object in an image from a realistic image generated by a generation unit or a realistic image converted by a conversion unit, a supervised determination unit receives the latent feature representation and an attribute label, and obtains a probability that the attribute label is real, that is, the certainty of the object, and thereby the trained generation unit or conversion unit is mechanically evaluated (refer to Patent Document 1).

### CITATION LIST

### PATENT DOCUMENT

Patent Document 1: Japanese Patent Application Laid-Open No. 2019-091440

### SUMMARY OF THE INVENTION

### PROBLEMS TO BE SOLVED BY THE INVENTION

However, in the technology of Patent Document 1, since manual attribute labels are required in addition to two determination units of the unsupervised determination unit and the supervised determination unit, the configuration and processing for mechanically evaluating the trained generation unit or conversion unit become complicated.

The present disclosure has been made in view of such circumstances, and particularly, an object of the present disclosure is to enable appropriate evaluation of a generation unit or a conversion unit obtained by learning with a simpler process.

### SOLUTIONS TO PROBLEMS

An information processing apparatus, an information processing system, and a program according to one aspect of the present disclosure are an information processing apparatus, an information processing system, and a program which include a recognition unit that recognizes an object in an input image, and an evaluation unit that evaluates the recognition unit.

An information processing method according to one aspect of the present disclosure is an information processing method of an information processing apparatus including a recognition unit that recognizes an object in an input image, and an evaluation unit that evaluates the recognition unit, and the information processing method includes steps for the evaluation unit to evaluate the recognition unit.

In one aspect of the present disclosure, an object in an input image is recognized, and the recognition unit is evaluated.

### BRIEF DESCRIPTION OF DRAWINGS

Fig. 1 is a block diagram illustrating a configuration example of a vehicle control system.
Fig. 2 is a diagram illustrating an example of a sensing area.
Fig. 3 is a diagram for describing a configuration example of a recognition unit in a case where the present technology is not applied.
Fig. 4 is a diagram for describing a configuration example of a recognition unit in a case where the present technology is applied.
Fig. 5 is a diagram for describing a configuration example of an evaluation filter generation unit in Fig. 4.
Fig. 6 is a diagram for describing learning of an object recognition filter.
Fig. 7 is a diagram for describing learning of a preprocessing filter.
Fig. 8 is a diagram for describing a cyclic generative adversarial network.
Fig. 9 is a diagram for describing generation of a learning set.
Fig. 10 is a diagram for describing generation of an evaluation image.
Fig. 11 is a diagram for describing generation of an evaluation filter.
Fig. 12 is a diagram for describing operation control using the evaluation filter.
Fig. 13 is a flowchart for describing an evaluation filter generation process.
Fig. 14 is a flowchart for describing an operation control process.
Fig. 15 is a diagram for describing a first modification example.
Fig. 16 is a diagram for describing a second modification example.
Fig. 17 is a diagram for describing a third modification example.
Fig. 18 is a diagram for describing a fourth modification example.
Fig. 19 is a diagram for describing a fifth modification example.
Fig. 20 is a diagram for describing a configuration example of a general-purpose computer.

### MODE FOR CARRYING OUT THE INVENTION

Hereinafter, preferred embodiments of the present disclosure will be described in detail with reference to the accompanying drawings. Note that, in the present specification and the drawings, constituents having substantially the same functional configuration will be assigned the same reference numerals and redundant description will be omitted.

Hereinafter, modes for carrying out the present technology will be described. The description will be given in the following order.
1. Configuration example of vehicle control system
2. Configuration example of recognition unit to which technology of present disclosure is not applied
3. Configuration example of recognition unit to which technology of present disclosure is applied
4. Configuration example of evaluation filter generation unit
5. First modification example
6. Second modification example
7. Third modification example
8. Fourth modification example
9. Fifth modification example
10. Example executed by software

### <<1. Configuration example of vehicle control system>>

The present technology enables a generation unit (conversion unit) obtained by learning to be evaluated by a simple process.

In the present specification, an example in a case where the present technology is applied to a mobile device control system will be described.

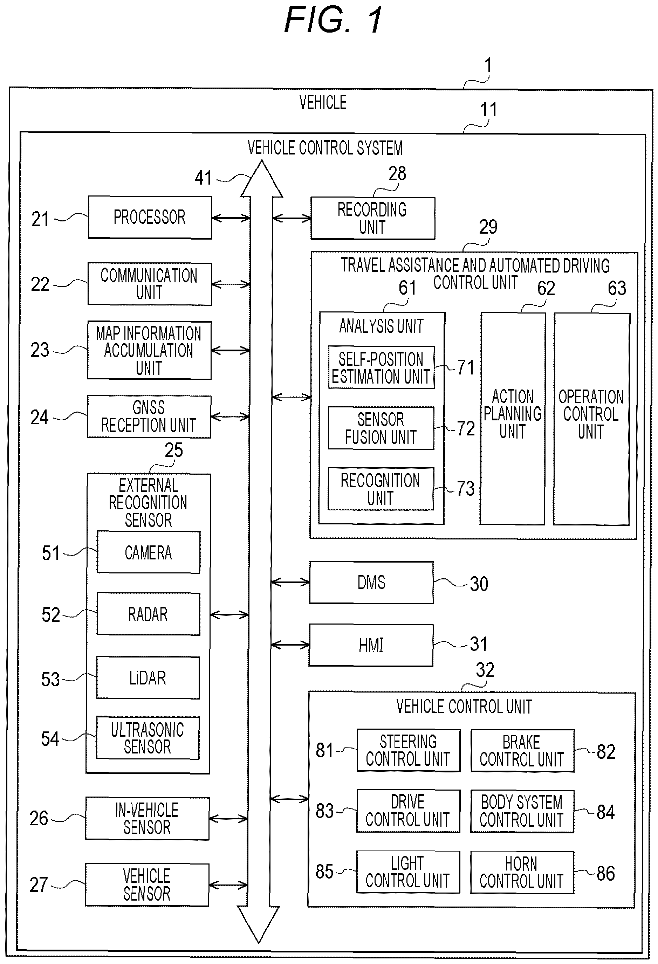

Fig. 1 is a block diagram illustrating a configuration example of a vehicle control system 11 that is an example of a mobile device control system to which the present technology is applied.

The vehicle control system 11 is provided in a vehicle 1, and performs processing relating to travel assistance and automated driving of the vehicle 1.

The vehicle control system 11 includes a processor 21, a communication unit 22, a map information accumulation unit 23, a global navigation satellite system (GNSS) reception unit 24, an external recognition sensor 25, an in-vehicle sensor 26, a vehicle sensor 27, a recording unit 28, a travel assistance and automated driving control unit 29, a driver monitoring system (DMS) 30, a human machine interface (HMI) 31, and a vehicle control unit 32.

The processor 21, the communication unit 22, the map information accumulation unit 23, the GNSS reception unit 24, the external recognition sensor 25, the in-vehicle sensor 26, the vehicle sensor 27, the recording unit 28, the travel assistance and automated driving control unit 29, the driver monitoring system (DMS) 30, the human machine interface (HMI) 31, and the vehicle control unit 32 are connected to each other via a communication network 41. The communication network 41 includes, for example, an in-vehicle communication network, a bus, or the like conforming to an arbitrary standard such as a controller area network (CAN), a local interconnect network (LIN), a local area network (LAN), FlexRay (registered trademark), or Ethernet. Note that each unit of the vehicle control system 11 may be directly connected by, for example, near field communication (NFC), Bluetooth (registered trademark), or the like without passing through the communication network 41.

Note that, hereinafter, in a case where each unit of the vehicle control system 11 performs communication via the communication network 41, description of the communication network 41 will be omitted. For example, in a case where the processor 21 and the communication unit 22 perform communication via the communication network 41, it is simply described that the processor 21 and the communication unit 22 perform communication.

The processor 21 includes various processors such as a central processing unit (CPU), a micro processing unit (MPU), and an electronic control unit (ECU), for example. The processor 21 controls the entire vehicle control system 11.

The communication unit 22 communicates with various devices inside and outside the vehicle, other vehicles, servers, base stations, and the like, and transmits and receives various kinds of data. As the communication with the outside of the vehicle, for example, the communication unit 22 receives a program for updating software for controlling the operation of the vehicle control system 11, map information, traffic information, information around the vehicle 1, and the like from the outside. For example, the communication unit 22 transmits information regarding the vehicle 1 (for example, data indicating the state of the vehicle 1, a recognition result by the recognition unit 73, and the like), information around the vehicle 1, and the like to the outside. For example, the communication unit 22 performs communication corresponding to a vehicle emergency call system such as eCall.

Note that a communication method of the communication unit 22 is not particularly limited. Furthermore, a plurality of communication methods may be used.

As the communication with the inside of the vehicle, for example, the communication unit 22 performs wireless communication with a device in the vehicle by a communication method such as wireless LAN, Bluetooth, NFC, or wireless USB (WUSB). For example, the communication unit 22 performs wired communication with a device in the vehicle by a communication method such as a universal serial bus (USB), a high-definition multimedia interface (HDMI, registered trademark), or a mobile high-definition link (MHL) via a connection terminal (and a cable as necessary) that is not illustrated.

Here, the device in the vehicle is, for example, a device that is not connected to the communication network 41 in the vehicle. For example, a mobile device or a wearable device carried by an occupant such as a driver, an information device brought into the vehicle and temporarily installed, or the like is assumed.

For example, the communication unit 22 performs communication with a server or the like existing on an external network (for example, the Internet, a cloud network, or a company-specific network) via a base station or an access point by a wireless communication method such as a fourth generation mobile communication system (4G), a fifth generation mobile communication system (5G), Long Term Evolution (LTE), or dedicated short range communication (DSRC).

For example, the communication unit 22 performs communication with a terminal (for example, a terminal of a pedestrian or a store, or a machine type communication (MTC) terminal) existing in the vicinity of a host vehicle using a peer to peer (P2P) technology. For example, the communication unit 22 performs V2X communication. The V2X communication is, for example, vehicle to vehicle communication with another vehicle, vehicle to infrastructure communication with a roadside device or the like, vehicle to home communication, vehicle to pedestrian communication with a terminal or the like carried by a pedestrian, or the like.

For example, the communication unit 22 receives electromagnetic waves transmitted by a road traffic information communication system (Ethernet (Vehicle Information and Communication System) registered trademark) such as a radio wave beacon, an optical beacon, or FM multiplex broadcasting.

The map information accumulation unit 23 accumulates a map acquired from the outside and a map created by the vehicle 1. For example, the map information accumulation unit 23 accumulates a three-dimensional high-precision map, a global map having lower accuracy than the highly accurate map and covering a wide area, and the like.

The high-precision map is, for example, a dynamic map, a point cloud map, a vector map (that is also referred to as an advanced driver assistance system (ADAS) map), or the like. The dynamic map is, for example, a map including four layers of dynamic information, quasi-dynamic information, quasi-static information, and static information, and is provided from an external server or the like. The point cloud map is a map including point clouds (point cloud data). The vector map is a map in which information such as a lane and a position of a signal is associated with the point cloud map. The point cloud map and the vector map may be provided from, for example, an external server or the like, or may be created by the vehicle 1 as a map for performing matching with a local map as described later on the basis of a sensing result by a radar 52, the LiDAR 53, or the like to be accumulated in the map information accumulation unit 23. Furthermore, in a case where a high-precision map is provided from an external server or the like, for example, map data for several hundred meters square regarding a planned path on which the vehicle 1 travels from now is acquired from the server or the like in order to reduce the communication capacity.

The GNSS reception unit 24 receives a GNSS signal from a GNSS satellite, and supplies the GNSS signal to the travel assistance and automated driving control unit 29.

The external recognition sensor 25 includes various sensors used for recognizing a situation outside the vehicle 1, and supplies sensor data from each sensor to each unit of the vehicle control system 11. The type and number of sensors included in the external recognition sensor 25 are arbitrary.

For example, the external recognition sensor 25 includes a camera 51, the radar 52, the light detection and ranging or laser imaging detection and ranging (LiDAR) 53, and an ultrasonic sensor 54. The number of the cameras 51, the radars 52, the LiDAR 53, and the ultrasonic sensors 54 is arbitrary, and an example of a sensing area of each sensor will be described later.

Note that, as the camera 51, for example, a camera of an arbitrary imaging system such as a time of flight (ToF) camera, a stereo camera, a monocular camera, or an infrared camera is used as necessary.

Furthermore, for example, the external recognition sensor 25 includes an environment sensor for detecting climate, weather, brightness, and the like. The environment sensor includes, for example, a raindrop sensor, a fog sensor, a sunshine sensor, a snow sensor, an illuminance sensor, and the like.

Moreover, for example, the external recognition sensor 25 includes a microphone used for detecting a sound around the vehicle 1, a position of a sound source, and the like.

The in-vehicle sensor 26 includes various sensors for detecting information inside the vehicle, and supplies the sensor data from each sensor to each unit of the vehicle control system 11. The type and number of sensors included in the in-vehicle sensor 26 are arbitrary.

For example, the in-vehicle sensor 26 includes a camera, a radar, a seating sensor, a steering wheel sensor, a microphone, a biological sensor, and the like. Note that, for example, a camera of an arbitrary imaging system such as a ToF camera, a stereo camera, a monocular camera, or an infrared camera can be used. The biological sensor is provided, for example, on a seat, a steering wheel, or the like, and detects various kinds of biological information of an occupant such as a driver.

The vehicle sensor 27 includes various sensors for detecting the state of the vehicle 1, and supplies the sensor data from each sensor to each unit of the vehicle control system 11. The type and number of sensors included in the vehicle sensor 27 are arbitrary.

For example, the vehicle sensor 27 includes a speed sensor, an acceleration sensor, an angular velocity sensor (gyro sensor), and an inertial measurement unit (IMU). For example, the vehicle sensor 27 includes a steering angle sensor that detects a steering angle of a steering wheel, a yaw-rate sensor, an accelerator sensor that detects an operation amount of an accelerator pedal, and a brake sensor that detects an operation amount of a brake pedal. For example, the vehicle sensor 27 includes a rotation sensor that detects the rotation speed of an engine or a motor, a pneumatic sensor that detects a pneumatic pressure of the tire, a slip rate sensor that detects a slip rate of the tire, and a wheel speed sensor that detects the rotation speed of the wheel. For example, the vehicle sensor 27 includes a battery sensor that detects the remaining amount and temperature of the battery, and an impact sensor that detects an external impact.

The recording unit 28 includes, for example, a read only memory (ROM), a random access memory (RAM), a magnetic storage device such as a hard disc drive (HDD), a semiconductor storage device, an optical storage device, a magneto-optical storage device, and the like. The recording unit 28 records various programs, data, and the like used by each unit of the vehicle control system 11. For example, the recording unit 28 records a rosbag file including a message transmitted and received by a Robot Operating System (ROS) in which an application program relating to automated driving is operated. For example, the recording unit 28 includes an event data recorder (EDR) and a Data Storage System for Automated Driving (DSSAD), and records information of the vehicle 1 before and after an event such as an accident.

The travel assistance and automated driving control unit 29 controls the travel support and automated driving of the vehicle 1. For example, the travel assistance and automated driving control unit 29 includes an analysis unit 61, an action planning unit 62, and an operation control unit 63.

The analysis unit 61 performs analysis processing for the situation of the vehicle 1 and the surroundings. The analysis unit 61 includes a self-position estimation unit 71, a sensor fusion unit 72, and a recognition unit 73.

The self-position estimation unit 71 estimates the self-position of the vehicle 1 on the basis of the sensor data from the external recognition sensor 25 and the high-precision map accumulated in the map information accumulation unit 23. For example, the self-position estimation unit 71 generates a local map on the basis of the sensor data from the external recognition sensor 25, and estimates the self-position of the vehicle 1 by matching the local map with the high-precision map. The position of the vehicle 1 is based on, for example, the center of the rear wheel pair axle.

The local map is, for example, a three-dimensional high-precision map created using a technology such as simultaneous localization and mapping (SLAM), an occupancy grid map, or the like. The three-dimensional high-precision map is, for example, the above-described point cloud map or the like. The occupancy grid map is a map in which a three-dimensional or two-dimensional space around the vehicle 1 is divided into grids having a predetermined size, and an occupancy state of an object is indicated in units of grids. The occupancy state of the object is indicated by, for example, the presence or absence or existence probability of the object. The local map is also used for detection processing and recognition processing for a situation outside the vehicle 1 by the recognition unit 73, for example.

Note that the self-position estimation unit 71 may estimate the self-position of the vehicle 1 on the basis of the GNSS signal and the sensor data from the vehicle sensor 27.

The sensor fusion unit 72 performs sensor fusion processing of combining a plurality of different types of sensor data (for example, image data supplied from the camera 51 and sensor data supplied from the radar 52) to obtain new information. Methods of combining different types of sensor data include integration, fusion, association, and the like.

The recognition unit 73 performs detection processing and recognition processing for the situation outside the vehicle 1.

For example, the recognition unit 73 performs the detection processing and the recognition processing for the situation outside the vehicle 1 on the basis of the information from the external recognition sensor 25, the information from the self-position estimation unit 71, the information from the sensor fusion unit 72, and the like.

Specifically, for example, the recognition unit 73 performs the detection process, the recognition process, and the like of an object around the vehicle 1. The detection processing for the object is, for example, processing of detecting the presence or absence, size, shape, position, movement, and the like of an object. The recognition processing for the object is, for example, processing of recognizing an attribute such as a type of an object or identifying a specific object. However, the detection processing and the recognition processing are not necessarily clearly divided, and may overlap.

For example, the recognition unit 73 detects an object around the vehicle 1 by performing clustering for classifying point clouds based on sensor data such as LiDAR or radar for each cluster of the point clouds. Therefore, the presence or absence, size, shape, and position of the object around the vehicle 1 are detected.

For example, the recognition unit 73 detects the movement of the object around the vehicle 1 by performing tracking of following the movement of the cluster of the point cloud classified by the clustering. Therefore, the speed and the traveling direction (movement vector) of the object around the vehicle 1 are detected.

For example, the recognition unit 73 recognizes the type of the object around the vehicle 1 by performing object recognition processing such as semantic segmentation on the image data supplied from the camera 51.

Note that, as the object to be detected or recognized, for example, a vehicle, a person, a bicycle, an obstacle, a structure, a road, a traffic light, a traffic sign, a road sign, and the like are assumed.

For example, the recognition unit 73 performs recognition processing for traffic rules around the vehicle 1 on the basis of the map accumulated in the map information accumulation unit 23, the estimation result of the self-position, and the recognition result of the object around the vehicle 1. By this process, for example, the position and state of the signal, the contents of the traffic sign and the road sign, the contents of the traffic regulation, the travelable lane, and the like are recognized.

For example, the recognition unit 73 performs the recognition processing for the environment around the vehicle 1. As the surrounding environment to be recognized, for example, the climate, the temperature, the humidity, the brightness, the state of a road surface, and the like are assumed.

The action planning unit 62 creates an action plan of the vehicle 1. For example, the action planning unit 62 creates an action plan by performing processing for path planning and path following.

Note that the path planning (global path planning) is processing of planning a path from the start to the goal. This path planning is called trajectory planning, and includes processing for trajectory generation (local path planning) that enables safe and smooth traveling in the vicinity of the vehicle 1 in consideration of the motion characteristics of the vehicle 1 in the path planned by the path planning.

The path following is processing of planning an operation for safely and accurately traveling the path planned by the path planning within a planned time. For example, the target speed and the target angular velocity of the vehicle 1 are calculated.

The operation control unit 63 controls the operation of the vehicle 1 in order to realize the action plan created by the action planning unit 62.

For example, the operation control unit 63 controls a steering control unit 81, a brake control unit 82, and a drive control unit 83 to perform acceleration and deceleration control and direction control such that the vehicle 1 travels on the trajectory calculated by the trajectory planning. For example, the operation control unit 63 performs cooperative control for the purpose of realizing the functions of the ADAS such as collision avoidance or impact mitigation, follow-up traveling, vehicle speed maintaining traveling, collision warning of the host vehicle, lane deviation warning of the host vehicle, and the like. For example, the operation control unit 63 performs cooperative control for the purpose of the automated driving or the like in which the vehicle autonomously travels without depending on the operation of the driver.

The DMS 30 performs a driver authentication process, a driver state recognition process, and the like on the basis of the sensor data from the in-vehicle sensor 26, the input data input to the HMI 31, and the like. As the state of the driver to be recognized, for example, a physical condition, a wakefulness level, a concentration level, a fatigue level, a line-of-sight direction, a drunkenness level, a driving operation, a posture, and the like are assumed.

Note that the DMS 30 may perform the authentication processing for an occupant other than the driver and the recognition processing for the state of the occupant. Furthermore, for example, the DMS 30 may perform the recognition processing for the situation inside the vehicle on the basis of the sensor data from the in-vehicle sensor 26. As the situation inside the vehicle to be recognized, for example, the temperature, humidity, brightness, odor, and the like are assumed.

The HMI 31 is used for inputting various kinds of data, instructions, and the like, generates an input signal on the basis of the input data, instructions, and the like, and supplies the input signal to each unit of the vehicle control system 11. For example, the HMI 31 includes an operation device such as a touch panel, a button, a microphone, a switch, and a lever, an operation device that can perform an input by a method other than a manual operation by voice, gesture, or the like, and the like. Note that the HMI 31 may be, for example, a remote control device using infrared rays or other radio waves, or an external connection device such as a mobile device or a wearable device compatible with the operation of the vehicle control system 11.

Furthermore, the HMI 31 performs output control to control generation and output of visual information, auditory information, and tactile information to the occupant or the outside of the vehicle, output content, output timing, an output method, and the like. The visual information is, for example, information indicated by an image or light such as an operation screen, a state display of the vehicle 1, a warning display, or a monitor image indicating a situation around the vehicle 1. The auditory information is, for example, information indicated by a voice such as guidance, a warning sound, or a warning message. The tactile information is, for example, information given to the tactile sense of the occupant by force, vibration, movement, or the like.

As a device that outputs visual information, for example, a display device, a projector, a navigation device, an instrument panel, a camera monitoring system (CMS), an electronic mirror, a lamp, and the like are assumed. The display device may be a device that displays visual information in the field of view of the occupant, such as a head-up display, a transmissive display, or a wearable device having an augmented reality (AR) function, in addition to a device having a normal display.

As a device that outputs auditory information, for example, an audio speaker, a headphone, an earphone, or the like is assumed.

As a device that outputs tactile information, for example, a haptic element using haptics technology or the like is assumed. The haptic element is provided, for example, on a steering wheel, a seat, or the like.

The vehicle control unit 32 controls each unit of the vehicle 1. The vehicle control unit 32 includes the steering control unit 81, the brake control unit 82, the drive control unit 83, a body system control unit 84, a light control unit 85, and a horn control unit 86.

The steering control unit 81 performs detection, control, and the like of the state of a steering system of the vehicle 1. The steering system includes, for example, a steering mechanism including a steering wheel and the like, an electric power steering, and the like. The steering control unit 81 includes, for example, a control unit such as an ECU that controls the steering system, an actuator that drives the steering system, and the like.

The brake control unit 82 performs detection, control, and the like of the state of a brake system of the vehicle 1. The brake system includes, for example, a brake mechanism including a brake pedal, an antilock brake system (ABS), and the like. The brake control unit 82 includes, for example, a control unit such as an ECU that controls the brake system, an actuator that drives the brake system, and the like.

The drive control unit 83 performs detection, control, and the like of the state of a drive system of the vehicle 1. The drive system includes, for example, a driving force generation device for generating a driving force such as an accelerator pedal, an internal combustion engine, or a driving motor, a driving force transmission mechanism for transmitting the driving force to wheels, and the like. The drive control unit 83 includes, for example, a control unit such as an ECU that controls the drive system, an actuator that drives the drive system, and the like.

The body system control unit 84 performs detection, control, and the like of the state of a body system of the vehicle 1. The body system includes, for example, a keyless entry system, a smart key system, a power window device, a power seat, an air conditioner, an airbag, a seat belt, a shift lever, and the like. The body system control unit 84 includes, for example, a control unit such as an ECU that controls the body system, an actuator that drives the body system, and the like.

The light control unit 85 performs detection, control, and the like of the state of various kinds of light of the vehicle 1. As the light to be controlled, for example, a headlight, a backlight, a fog light, a turn signal, a brake light, a projection, a display of a bumper, and the like are assumed. The light control unit 85 includes, for example, a control unit such as an ECU that controls the light, an actuator that drives the light, and the like.

The horn control unit 86 performs detection, control, and the like of the state of a car horn of the vehicle 1. The horn control unit 86 includes, for example, a control unit such as an ECU that controls the car horn, an actuator that drives the car horn, and the like.

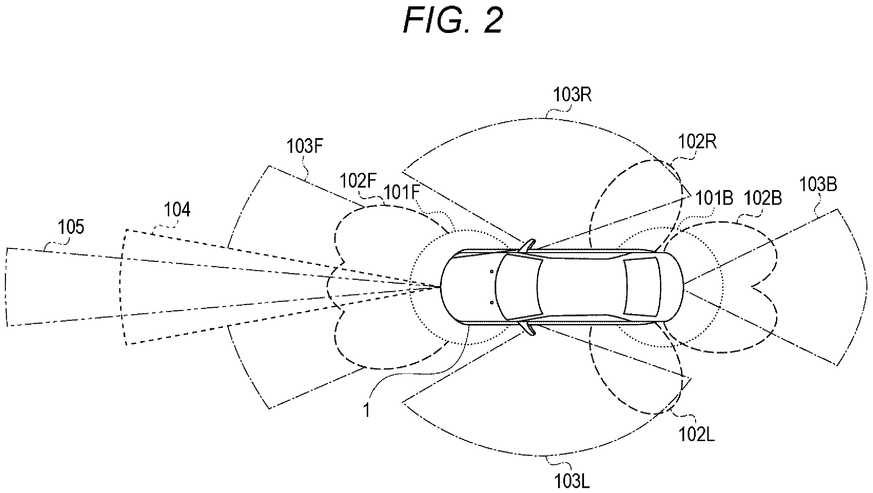

Fig. 2 is a diagram illustrating an example of a sensing area by the camera 51, the radar 52, the LiDAR 53, and the ultrasonic sensor 54 of the external recognition sensor 25 in Fig. 1.

A sensing area 101F and a sensing area 101B illustrate examples of the sensing areas of the ultrasonic sensor 54. The sensing area 101F covers the periphery of the front end of the vehicle 1. The sensing area 101B covers the periphery of the rear end of the vehicle 1.

The sensing results in the sensing area 101F and the sensing area 101B are used, for example, for parking assistance or the like of the vehicle 1.

A sensing area 102F to a sensing area 102B illustrate examples of sensing areas of the radar 52 for a short distance or a middle distance. The sensing area 102F covers an area up to a position farther than the sensing area 101F in front of the vehicle 1. The sensing area 102B covers an area up to a position farther than the sensing area 101B behind the vehicle 1. The sensing area 102L covers the rear periphery of the left side surface of the vehicle 1. The sensing area 102R covers the rear periphery of the right side surface of the vehicle 1.

The sensing result in the sensing area 102F is used, for example, to detect a vehicle, a pedestrian, or the like existing in front of the vehicle 1. The sensing result in the sensing area 102B is used, for example, for a collision prevention function or the like behind the vehicle 1. The sensing results in the sensing area 102L and the sensing area 102R are used, for example, for the detection or the like of an object in a blind spot on the sides of the vehicle 1.

A sensing area 103F to a sensing area 103B illustrate examples of the sensing areas by the camera 51. The sensing area 103F covers an area up to a position farther than the sensing area 102F in front of the vehicle 1. The sensing area 103B covers an area up to a position farther than the sensing area 102B behind the vehicle 1. The sensing area 103L covers the periphery of the left side surface of the vehicle 1. The sensing area 103R covers the periphery of the right side surface of the vehicle 1.

The sensing result in the sensing area 103F is used, for example, for the recognition of a traffic light or a traffic sign, a lane deviation prevention assistance system, and the like. The sensing result in the sensing area 103B is used, for example, for parking assistance, a surround view system, and the like. The sensing results in the sensing area 103L and the sensing area 103R are used, for example, in the surround view system or the like.

A sensing area 104 illustrates an example of a sensing area of the LiDAR 53. The sensing area 104 covers an area up to a position farther than the sensing area 103F in front of the vehicle 1. On the other hand, the sensing area 104 has a narrower range in a left-right direction than the sensing area 103F.

The sensing result in the sensing area 104 is used, for example, for emergency braking, collision avoidance, pedestrian detection, and the like.

A sensing area 105 illustrates an example of a sensing area of the radar 52 for a long distance. The sensing area 105 covers an area up to a position farther than the sensing area 104 in front of the vehicle 1. On the other hand, the sensing area 105 has a narrower range in a left-right direction than the sensing area 104.

The sensing result in the sensing area 105 is used, for example, for adaptive cruise control (ACC).

Note that the sensing area of each sensor may have various configurations other than those in Fig. 2. Specifically, the ultrasonic sensor 54 may also sense the sides of the vehicle 1, or the LiDAR 53 may sense the rear of the vehicle 1.

### <<2. Configuration example of recognition unit to which technology of present disclosure is not applied>>

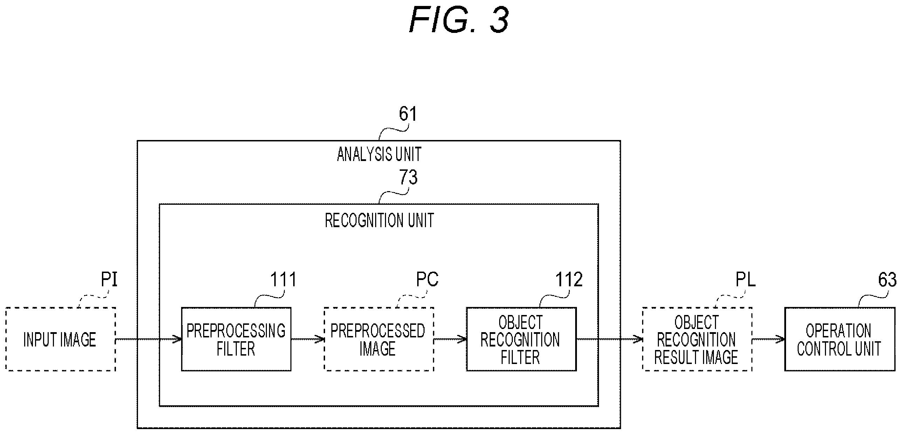

Next, in describing the configuration of the recognition unit 73 to which the technology of the present disclosure is applied, a configuration example of the recognition unit 73 to which the technology of the present disclosure is not applied will be described with reference to Fig. 3.

Note that, in the present embodiment, a description will be given taking, as an example, a configuration in which object recognition processing is performed on an image captured by the camera 51 in the recognition unit 73.

The recognition unit 73 to which the technology of the present disclosure is not applied includes a preprocessing filter 111 and an object recognition filter 112.

The preprocessing filter 111 performs processing on an input image PI, converts the input image PI into a preprocessed image PC, and outputs the preprocessed image PC to the object recognition filter 112.

More specifically, the preprocessing filter 111 performs, on a low-quality input image PI that lowers the object recognition accuracy in the object recognition filter 112, such as a low illuminance image, an image including noise, a cloudy or hazy image, an image with blurring caused by movement, an image with no focus, an image with saturated luminance, or an image with a poor light state in a stormy weather such as heavy rain or snow, filter processing for enhancing the quality such as adjustment of illuminance, noise removal, removal of cloudiness or hazy, removal of blurring, focus adjustment, luminance adjustment, and adjustment of the image in the stormy weather to an image close to a good weather state, corrects the input image PI, converts the input image PI into the preprocessed image PC, and outputs the preprocessed image PC to the object recognition filter 112.

The preprocessing filter 111 is a filter generated by so-called supervised learning using a low-quality image that reduces the accuracy of the filter processing in the object recognition filter 112 and a corresponding high-quality image, and includes, for example, a neural network.

The object recognition filter 112 performs the object recognition processing such as semantic segmentation on the preprocessed image PC preprocessed by the preprocessing filter 111, recognizes an object in units of pixels, and outputs an image including the recognition result as an object recognition result image PL.

The object recognition filter 112 is a filter generated by so-called supervised learning using the input image and information in which the object recognition result is labeled in a corresponding pixel unit, and includes, for example, a neural network.

The operation control unit 63 recognizes an object of a subject in the image on the basis of the object recognition result in units of pixels in the object recognition result image PL, and controls the operation of the vehicle 1 on the basis of the recognition result.

However, since the learning of the preprocessing filter 111 is insufficient and instability or bias occurs, there is a possibility that appropriate preprocessing cannot be necessarily performed.

That is, in a case where the preprocessing filter 111 cannot sufficiently learn, and for example, appropriate preprocessing cannot be performed on the input image PI, there is a possibility that appropriate object recognition is not performed in the object recognition filter 112, and therefore, there is a possibility that the recognition result of each pixel unit in the object recognition result image PL becomes an inappropriate recognition result.

That is, for example, in a case where it has been recognized that there is no object having a risk of collision in the object recognition result image PL, but in practice, the preprocessing by the preprocessing filter 111 is insufficient so that the object having a risk of collision cannot be recognized although there is the object, there is a possibility that the collision avoidance action cannot be taken.

As a result, the operation control unit 63 may not be able to appropriately control the operation of the vehicle 1 on the basis of the object recognition result image PL including the inappropriate recognition result, and in the worst case, an accident may be induced.

### <<3. Configuration example of recognition unit to which technology of present disclosure is applied>>

Therefore, in the present disclosure, an evaluation image for evaluating the preprocessing filter 111, corresponding to the object recognition result image can be generated on the basis of the input image, and the operation control can be realized after grasping the evaluation for the recognition result in the object recognition result image.

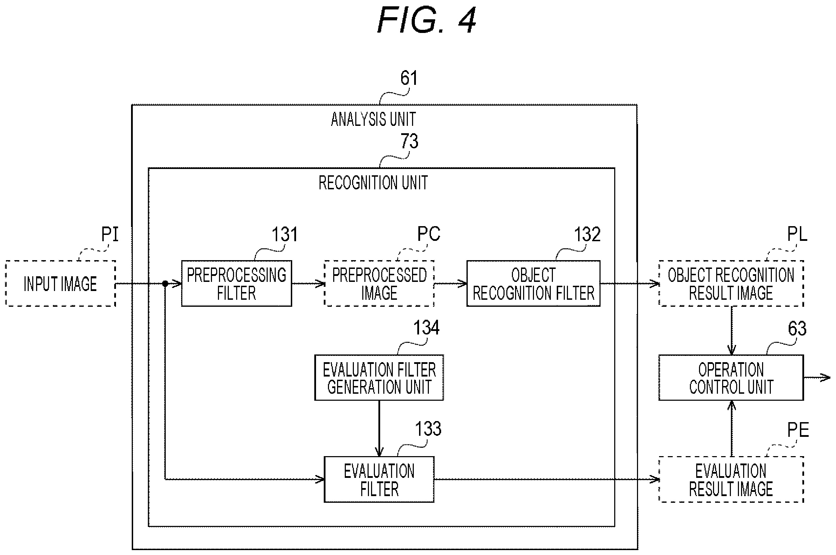

More specifically, as illustrated in Fig. 4, the recognition unit 73 to which the technology of the present disclosure is applied includes a preprocessing filter 131, an object recognition filter 132, an evaluation filter 133, and an evaluation filter generation unit 134.

Note that the preprocessing filter 131 and the object recognition filter 132 have configurations corresponding to the preprocessing filter 111 and the object recognition filter 112 in Fig. 3, and have the same function, and thus, the description thereof is omitted.

The evaluation filter 133 performs processing on the input image PI, and generates and outputs an evaluation image PE for evaluating the preprocessing filter 131.

The evaluation image PE is, for example, an image corresponding to the preprocessed image PC obtained by performing the filter processing on the input image PI by the preprocessing filter 131, and is an image having a higher pixel value as the preprocessing is not appropriate in units of pixels.

That is, in a case where the processing by the preprocessing filter 131 is appropriate, the evaluation image PE becomes an entirely black image, and in a case where the processing by the preprocessing filter 131 is inappropriate, the evaluation image PE becomes an image in which an inappropriate portion is bright.

Therefore, in the evaluation image PE, as the image is brighter as a whole, the preprocessing by the preprocessing filter 131 is not sufficiently performed and the evaluation of the preprocessing is represented to be low, and conversely, as the image is darker as a whole, the preprocessing by the preprocessing filter 131 is sufficient and the evaluation of the preprocessing is represented to be high.

Furthermore, as the preprocessing by the preprocessing filter 131 is more appropriate, the preprocessed image PC becomes an appropriately corrected image, and thus the object recognition processing by the object recognition filter 132 is performed with higher accuracy.

Therefore, a region with low evaluation in the evaluation image PE can be regarded that the preprocessing is not sufficiently performed and the object recognition accuracy by the object recognition filter 132 is low, or that the preprocessing may be sufficiently performed but the object recognition accuracy by the object recognition filter 132 is low. Conversely, a region with high evaluation in the evaluation image PE can be regarded as that the preprocessing by the preprocessing filter 131 is sufficiently performed and the object recognition accuracy by the object recognition filter 132 is high.

Therefore, it can be said that the evaluation image PE is an image for evaluating the degree of the preprocessing performed by the preprocessing filter 131, and is also an image for evaluating the object recognition accuracy in the entire recognition unit 73.

The operation control unit 63 evaluates the object recognition result image PL in units of pixels on the basis of the evaluation image PE, and controls the operation of the vehicle 1 according to the evaluation.

That is, for example, the operation control unit 63 may not use the object recognition result image PL in which a region having a high pixel value in the corresponding evaluation image PE is larger than a predetermined area in the object recognition result image PL in controlling the operation of the vehicle 1.

At this time, for example, the operation control unit 63 may obtain an evaluation score using the pixel value of the evaluation image PE, consider that the evaluation is low in a case where the evaluation score is lower than a predetermined value, and may not use the object recognition result image PL in controlling the operation of the vehicle 1.

Here, the evaluation score may be, for example, a reciprocal of an addition value of pixel values of all pixels. That is, as the entire evaluation image PE is brighter and the addition value of the pixel values of all the pixels is larger, the evaluation score is smaller and the evaluation on the preprocessing and the object recognition processing is lower, and as the entire evaluation image PE is darker and the addition value of the pixel values of all the pixels is smaller, the evaluation score is larger and the evaluation on the preprocessing and the object recognition processing is higher.

Furthermore, since the preprocessing filter 131 includes, for example, a neural network or the like trained by supervised learning, switching to another preprocessing filter 131 trained on the basis of other teacher data having high evaluation by the evaluation image PE may be performed.

With such processing, it is possible to realize appropriate operation control of the vehicle 1 according to the reliability of the preprocessing filter 131.

### <<4. Configuration example of evaluation filter generation unit>>

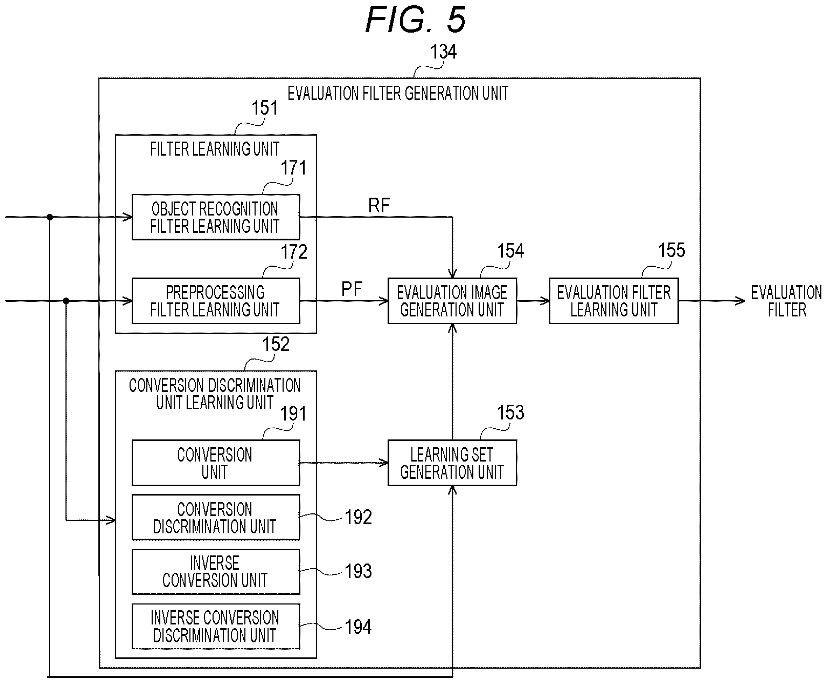

Next, a configuration example of the evaluation filter generation unit 134 will be described with reference to Fig. 5.

The evaluation filter generation unit 134 includes a filter learning unit 151, a conversion discrimination unit learning unit 152, a learning set generation unit 153, an evaluation image generation unit 154, and an evaluation filter learning unit 155.

### <Filter learning unit>

The filter learning unit 151 generates a preprocessing filter PF and an object recognition filter RF corresponding to the preprocessing filter 131 and the object recognition filter 132 by learning.

More specifically, the filter learning unit 151 includes an object recognition filter learning unit 171 and a preprocessing filter learning unit 172.

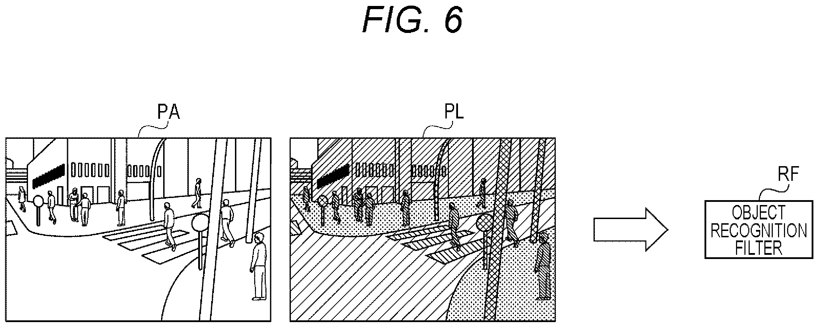

For example, as illustrated in Fig. 6, the object recognition filter learning unit 171 generates the object recognition filter RF on the basis of the supervised learning using a plurality of sets of an input image PA and the object recognition result image PL with a label for identifying an object with respect to the input image PA, and outputs the object recognition filter RF to the evaluation image generation unit 154.

That is, the object recognition filter RF generated by the object recognition filter learning unit 171 includes, for example, a neural network, recognizes an object in units of pixels from the input image, and outputs the object recognition result image PL with a label such as a semantic label, for example, as the recognition result.

In Fig. 6, the input image PA is an image of a daytime landscape of a crosswalk at an intersection, and the object recognition result image PL is an image to which a label for each object in the input image PA is attached as a pattern.

In the object recognition result image PL in Fig. 6, the label for each object is, for example, a road, a crosswalk, a pedestrian, a sidewalk, a sign, a building, or the like, and includes, for example, information attached by manual input or the like.

Note that the object recognition filter RF generated by the object recognition filter learning unit 171 has the same configuration as the object recognition filter 132 in the recognition unit 73 in Fig. 4, but is generated only to generate the evaluation filter 133.

Therefore, the object recognition filter 132 in the recognition unit 73 in Fig. 4 may be the object recognition filter RF generated by the object recognition filter learning unit 171, or may be generated with another configuration.

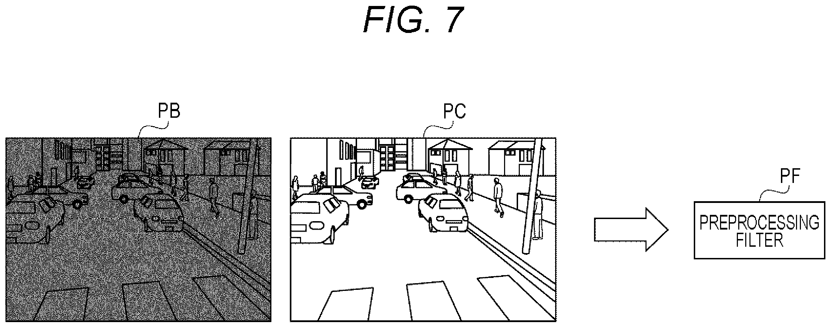

For example, as illustrated in Fig. 7, the preprocessing filter learning unit 172 generates the preprocessing filter PF on the basis of the supervised learning using a plurality of sets of a low-quality input image PB and a high-quality output image PC that is a corresponding preprocessed image, and outputs the preprocessing filter PF to the evaluation image generation unit 154.

That is, the preprocessing filter PF generated by the preprocessing filter learning unit 172 includes, for example, a neural network, and outputs a high-quality image obtained by improving the image quality of the low-quality input image.

In Fig. 7, the low-quality input image PB is a dark image with low illuminance, and the output image PC is a bright image with high illuminance corresponding to the input image PB.

Although Fig. 7 illustrates an example of a dark image as an example of a low-quality image, other images may be used as long as the image is low quality. For example, an image including noise, a cloudy or hazy image, an image with blurring caused by movement, an image with no focus, an image with saturated luminance, or an image with a poor light state in a stormy weather such as heavy rain or snow may be used. In this case, an image from which corresponding noise has been removed, an image from which cloudiness or hazy has been removed, an image from which blurring has been removed, an image on which focus adjustment has been performed, an image in which luminance has been adjusted, and an image close to a good weather state are used as the output image PC corresponding to the preprocessed image.

Note that the preprocessing filter PF generated by the preprocessing filter learning unit 172 has the same configuration as the preprocessing filter 131 in the recognition unit 73 in Fig. 4, but is generated only to generate the evaluation filter 133.

Therefore, the preprocessing filter 131 in the recognition unit 73 in Fig. 4 may be the preprocessing filter PF generated by the preprocessing filter learning unit 172, or may be generated with another configuration.

### Conversion discrimination unit learning unit>

The conversion discrimination unit learning unit 152 generates a conversion unit 191, a conversion discrimination unit 192, an inverse conversion unit 193, and an inverse conversion discrimination unit 194 by causing the units to be subjected to mutual learning by using a cyclic generative adversarial network (Cyclic GAN), and outputs the conversion unit 191 to the learning set generation unit 153.

Here, the conversion unit 191 includes, for example, a neural network, and converts the input image PA used for the learning of the object recognition filter RF into an image PA' similar to the input image PB used for the generation of the preprocessing filter PF.

The conversion discrimination unit 192 includes, for example, a neural network, obtains an error loss from the comparison between the image PA' converted to be similar to the input image PB by the conversion unit 191 and the input image PB used for the learning of the preprocessing filter PF, and determines whether or not the image PA' is the input image PB.

The inverse conversion unit 193 includes, for example, a neural network, and converts the input image PB used for the learning of the preprocessing filter PF into an image PB' similar to the input image PA used for the generation of the object recognition filter RF.

The inverse conversion discrimination unit 194 includes, for example, a neural network, obtains an error loss from the comparison between the image PB' converted to be similar to the input image PA by the inverse conversion unit 193 and the input image PA used for the learning of the object recognition filter RF, and determines whether or not the image PB' is the input image PA.

The generative adversarial network (GAN) causes a conversion unit (generation unit) that converts data into data similar to specific data on the basis of random noise and a determination unit that determines whether or not the data similar to specific data converted (generated) by the conversion unit (generation unit) is the real specific data, to adversarially learns each other.

Therefore, the conversion unit (generation unit) is trained to convert data (generate data) into data to be determined to be the real specific data by the determination unit, and the determination unit is trained to be able to determine that the data converted by the conversion unit (generation unit) is not the real data.

As a result, the conversion unit (generation unit) is trained to be able to convert (generate) the data to be converted (generated) from the random noise into data similar to the real specific data with higher accuracy, and the determination unit is trained to be able to determine that the data converted (generated) to be similar to the real specific data is not the real specific data, with high accuracy.

The cyclic generative adversarial network (Cyclic GAN) realizes cyclic unsupervised learning by combining a plurality of conversion units and determination units trained by the above-described generative adversarial network (GAN), and thereby trains the plurality of conversion units (generation units) and determination units.

In the conversion discrimination unit learning unit 152, the conversion unit 191 and the inverse conversion unit 193, and the conversion discrimination unit 192 and the inverse conversion discrimination unit 194 are trained by the cyclic generative adversarial network (Cyclic GAN).

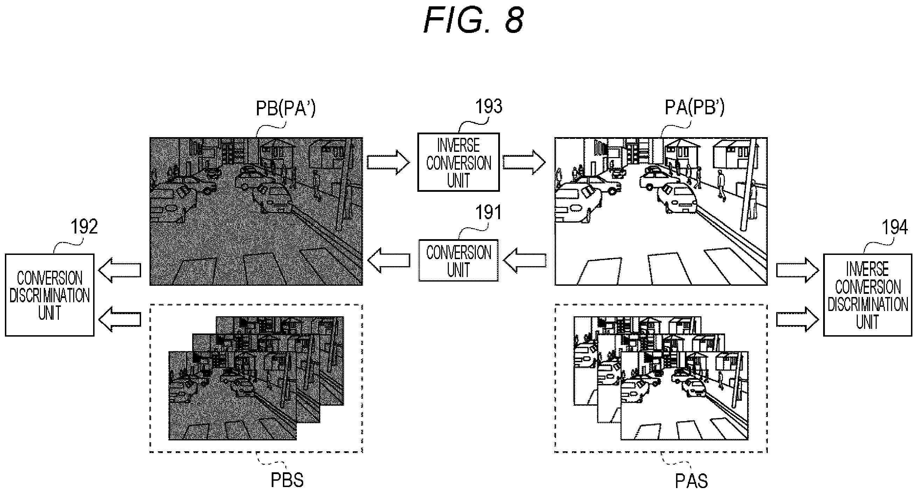

That is, as illustrated in Fig. 8, the conversion unit 191 converts the input image PA used for the learning of the object recognition filter RF into the image PA' similar to the input image PB used for the generation of the preprocessing filter PF.

The conversion discrimination unit 192 obtains an error loss from the comparison between the image PA' converted to be similar to the input image PB by the conversion unit 191 and a set PBS of the input images PB used for the learning of the preprocessing filter PF, and determines whether or not the image PA' is the input image PB.

The inverse conversion unit 193 converts the image PA' into the image PB' similar to the input image PA used for the generation of the object recognition filter RF, by using the image PA' as the input image PB used for the learning of the preprocessing filter PF. That is, the inverse conversion unit 193 inversely converts the image PA' converted and generated from the input image PA by the conversion unit 191, into the image PB' similar to the input image PA.

The inverse conversion discrimination unit 194 obtains an error loss from the comparison between the image PB' inversely converted to be similar to the input image PA by the inverse conversion unit 193 and a set PAS of the input images PA used for the learning of the object recognition filter RF, and determines whether or not the image PB' is the input image PA.

The conversion unit 191, the conversion discrimination unit 192, the inverse conversion unit 193, and the inverse conversion discrimination unit 194 configured in this manner are subjected to mutual learning by the cyclic generative adversarial network (Cyclic GAN), so that the conversion unit 191 is configured to be able to convert the input image PA used for the learning of the object recognition filter RF into the input image PB used for the generation of the preprocessing filter PF, with high accuracy.

Furthermore, the conversion discrimination unit 192 can determine whether or not the image PA' converted from the input image PA by the conversion unit 191 is the input image PB, with high accuracy.

Therefore, it is possible to mutually improve the conversion accuracy in the conversion unit 191 and the determination accuracy by the conversion discrimination unit 192 as to whether or not the conversion result of the conversion unit 191 is real.

Similarly, it is possible to mutually improve the inverse conversion accuracy in the inverse conversion unit 193 and the determination accuracy by the inverse conversion discrimination unit 194 as to whether or not the inverse conversion result of the inverse conversion unit 193 is real.

By such processing, for example, the conversion unit 191 can convert the high-quality input image PA having little influence on the object recognition used for the learning of the object recognition filter RF, into the low-quality input image PB used for the learning of the preprocessing filter PF, with high accuracy.

In the example in Fig. 8, the conversion unit 191 can convert a high-quality bright image used for the learning of the object recognition filter RF into a low-quality dark image used for the learning of the preprocessing filter PF, with high accuracy.

Furthermore, the conversion unit 191 can convert a low-quality image into a high-quality image of a corresponding type, according to the type of the low-quality image.

That is, the type of the low-quality image is, for example, a dark image, an image including noise, a cloudy or hazy image, an image with blurring caused by movement, an image with no focus, an image with saturated luminance, or an image with a poor light state in a stormy weather such as heavy rain or snow.

Therefore, the conversion unit 191 converts the above-described low-quality image into a high-quality image such as a bright image, an image from which corresponding noise has been removed, an image from which cloudiness or hazy has been removed, an image from which blurring has been removed, an image on which focus adjustment has been performed, an image in which luminance has been adjusted, and an image close to a good weather state, according to the type of the low-quality image.

That is, for example, the conversion unit 191 converts a dark image having low brightness as the type, into a bright high-quality image, with high accuracy. Furthermore, for example, the conversion unit 191 converts a low-quality image including noise as the type, into a high-quality image from which noise has been removed, with high accuracy. Moreover, the conversion unit 191 converts, for example, a low-quality image including cloudiness or hazy as the type, into a high-quality image from which the cloudiness or hazy has been removed. Furthermore, the conversion unit 191 converts, for example, a low-quality image with blurring caused by movement as the type, into a high-quality image from which the blurring has been removed. Moreover, the conversion unit 191 converts, for example, a low-quality image with no focus as the type, into a high-quality image that is focused. Furthermore, the conversion unit 191 converts, for example, a low-quality image with saturated luminance as the type, into a high-quality image in which the luminance is appropriately adjusted. Moreover, the conversion unit 191 converts, for example, a low-quality image with a poor light state in a stormy weather such as heavy rain or snow as the type, into a high-quality image with a favorable light state.

Furthermore, similarly, the inverse conversion unit 193 can convert the low-quality input image PB used for the learning of the preprocessing filter PF, into the high-quality input image PA having little influence on the object recognition used for the learning of the object recognition filter RF, with high accuracy.

The conversion discrimination unit learning unit 152 outputs the conversion unit 191 among the conversion unit 191, the conversion discrimination unit 192, the inverse conversion unit 193, and the inverse conversion discrimination unit 194 generated by the learning by such a cyclic generative adversarial network (Cyclic GAN), to the learning set generation unit 153.

### <Learning set generation unit>

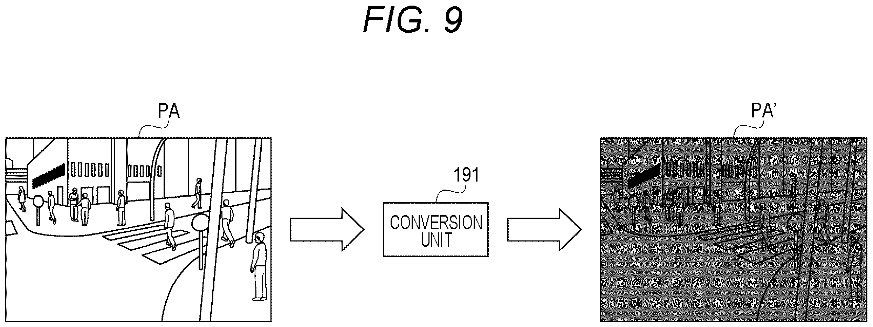

As illustrated in Fig. 9, the learning set generation unit 153 uses the conversion unit 191 supplied from the conversion discrimination unit learning unit 152 to convert a high-quality input image PA having little influence on the object recognition used for the learning of the object recognition filter RF, into the image PA' similar to the low-quality input image PB used for the learning of the preprocessing filter PF, with high accuracy.

The learning set generation unit 153 outputs, as a learning set, a pair of the generated high-quality input image PA and the image PA' similar to the low-quality input image PB used for the learning of the preprocessing filter PF to the evaluation image generation unit 154.

### <Evaluation image generation unit>

The evaluation image generation unit 154 generates a heat map representing an error of the preprocessing filter PF as the evaluation image PE on the basis of the learning set including the pair of the high-quality input image PA and the image PA' similar to the low-quality input image PB used for the learning of the preprocessing filter PF, the preprocessing filter PF, and the object recognition filter RF, and outputs the heat map to the evaluation filter learning unit 155.

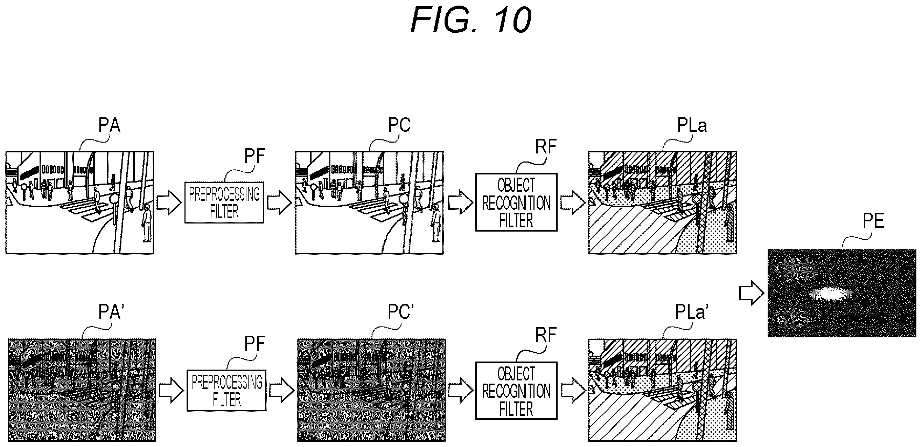

More specifically, as illustrated in Fig. 10, the evaluation image generation unit 154 applies the preprocessing filter PF to the high-quality input image PA to generate the preprocessed image PC, and further applies the object recognition filter RF to the image PC to generate an object recognition result image PLa.

Furthermore, the evaluation image generation unit 154 applies the preprocessing filter PF to the low-quality input image PA' to generate a preprocessed image PC', and further applies the object recognition filter RF to the image PC' to generate an object recognition result image PLa'.

Moreover, the evaluation image generation unit 154 generates, as the evaluation image PE, a heat map in which the difference between pixel values in units of pixels of the object recognition result image PLa obtained on the basis of the high-quality input image PA and the object recognition result image PLa' obtained on the basis of the low-quality input image PA' is set as the pixel value.

That is, since the input images PA and PA' are obtained by applying the same object recognition filter RF to basically the same image in a high-quality state and image in a low-quality state, the evaluation image PE including the heat map in which the difference between the object recognition result images PLa and PLa' obtained by processing each of the images is set as the pixel value can be regarded as an image for evaluating the preprocessing filter PF.

That is, since the input images PA and PA' correspond to the teacher data at the time of the learning of the preprocessing filter PF, in a case where ideally sufficient learning has been performed, the images PC and PC' to which the preprocessing filter PF has been applied become the same input image PA, and the object recognition result images PLa and PLa' that are processing results of the object recognition filter RF become the same.

Therefore, ideally, the difference between the pixel values of all the pixels of the object recognition result images PLa and PLa' becomes zero, and the evaluation image EP becomes a completely dark image.

However, in a case where sufficient learning has not been performed on the preprocessing filter PF, the preprocessing cannot be sufficiently performed. Therefore, a label indicating a different object recognition result is given to a pixel in a region where the preprocessing is not sufficiently performed among the images PC and PC' to which the preprocessing filter PF is applied, and thus a difference is generated between the pixel values.

Therefore, in the evaluation image PE, a region having a high pixel value, being bright, and having a large difference between the object recognition result images PLa and PLa' can be regarded as a region in which sufficient preprocessing is not performed by the preprocessing filter PF, and appropriate object recognition cannot be performed.

Furthermore, in the evaluation image PE, a region having a pixel value close to zero, being dark, and having a small difference between the object recognition result images PLa and PLa' can be regarded as a region in which the preprocessing by the preprocessing filter PF is sufficiently performed and appropriate object recognition is performed.

The evaluation image generation unit 154 obtains the evaluation image PE for each of a plurality of learning sets each including a pair of the high-quality input image PA and the image PA' similar to the low-quality input image PB used for the learning of the preprocessing filter PF, and outputs a plurality of sets of the images PA' similar to the low-quality input images PB used for the learning of the preprocessing filter PF and the corresponding evaluation images PE, to the evaluation filter learning unit 155.

### <Evaluation filter learning unit>

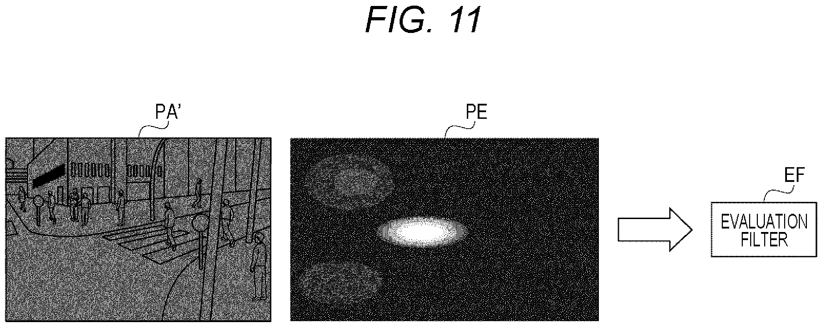

As illustrated in Fig. 11, the evaluation filter learning unit 155 obtains an evaluation filter EF corresponding to the evaluation filter 133 by supervised learning on the basis of the plurality of sets of the images PA' similar to the low-quality input images PB used for the learning of the preprocessing filter PF and the corresponding evaluation images PE.

That is, by this learning, it is possible to generate the evaluation filter EF capable of generating the evaluation image PE by performing the filter processing on the low-quality input image PB.

Through the above series of processing, the evaluation filter EF is generated as the evaluation filter 133 in Fig. 4 to configure the recognition unit 73 in Fig. 4.

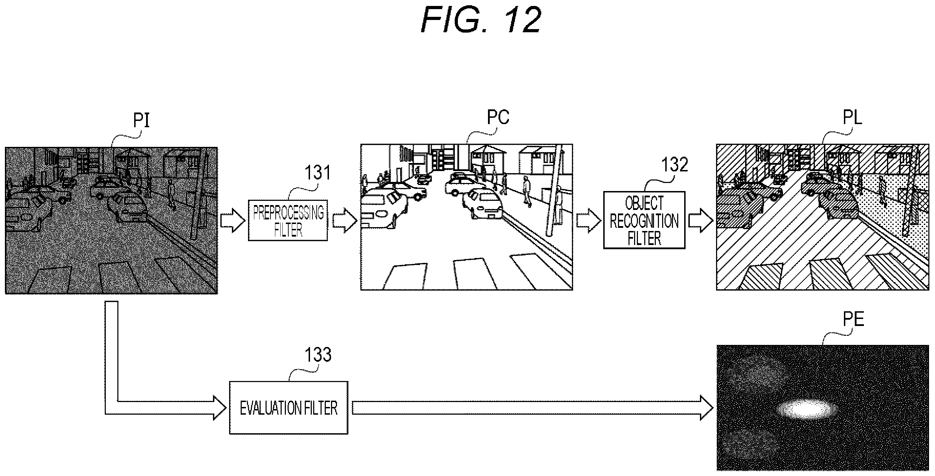

Therefore, in the recognition unit 73 of Fig. 4, as illustrated in Fig. 12, the low-quality input image PI is applied with the preprocessing filter 131 to be subjected to the preprocessing, so that the low-quality input image PI is converted into a high-quality image PC, and further, the image PC is applied with the object recognition filter 132, so that the object recognition result image PL to which a label corresponding to the object recognition result is attached in units of pixels is generated.

Furthermore, the evaluation filter EF generated by the evaluation filter generation unit 134 is configured as the evaluation filter 133, and the input image PI is applied with the evaluation filter 133, so that the corresponding evaluation image PE is obtained.

The operation control unit 63 controls the operation of the vehicle 1 on the basis of the object recognition result image PL.

At this time, for example, in the evaluation image PE, in a case where a region in which the pixel value is higher than the predetermined value, the preprocessing is not sufficiently performed by the preprocessing filter 131, and there is a high possibility that the appropriate object recognition is not performed is larger than a predetermined area, and the object recognition result image PL is regarded to be less reliable than a predetermined level, the operation control unit 63 may not execute the operation control based on the object recognition result image PL.

Furthermore, regarding the preprocessing filter 131, since the type of the image that can be appropriately preprocessed is changed depending on the teacher data used for the supervised learning, a plurality of preprocessing filters 131 according to the type of the teacher data may be prepared in advance, and the operation control unit 63 may switch the preprocessing filter 131 to obtain the evaluation image PE, select the preprocessing filter 131 having the highest evaluation based on the evaluation image PE, and execute the operation control based on the object recognition result image PL.

Moreover, for example, in the evaluation image PE, regarding the region in which the pixel value is higher than the predetermined value, the preprocessing is not sufficiently performed by the preprocessing filter 131, and the appropriate object recognition is not performed, it is regarded that the object recognition result of the object recognition result image PL is not sufficient, and the operation control unit 63 may execute the operation control based on the information on a region other than the region in which the pixel value is higher than the predetermined value in the object recognition result image PL.

As a result, the operation control unit 63 can evaluate the object recognition result image PL on the basis of the evaluation image PE, and realize appropriate operation control according to the evaluation result.

### <Evaluation filter generation process>

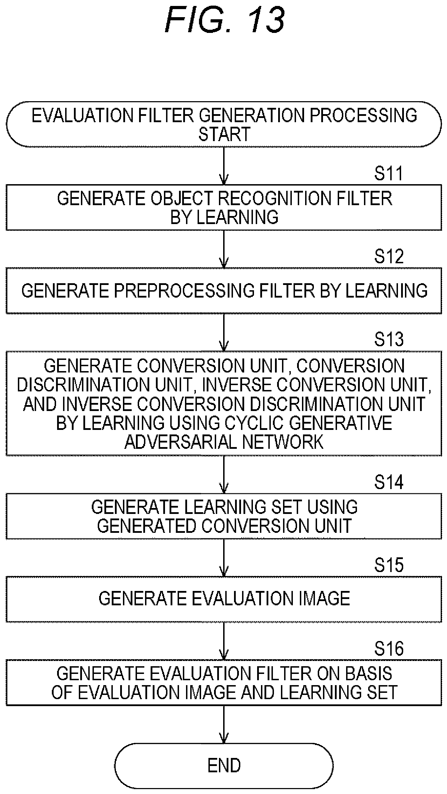

Next, the evaluation filter generation processing by the evaluation filter generation unit 134 will be described with reference to the flowchart in Fig. 13.

In step S11, the object recognition filter learning unit 171 of the filter learning unit 151 generates the object recognition filter RF by the supervised learning by the method described with reference to Fig. 6, and outputs the object recognition filter RF to the evaluation image generation unit 154.

In step S12, the preprocessing filter learning unit 172 of the filter learning unit 151 generates the preprocessing filter PF by the supervised learning by the method described with reference to Fig. 7, and outputs the preprocessing filter PF to the evaluation image generation unit 154.

In step S13, the conversion discrimination unit learning unit 152 generates the conversion unit 191, the conversion discrimination unit 192, the inverse conversion unit 193, and the inverse conversion discrimination unit 194 by the unsupervised learning using the cyclic generative adversarial network (Cyclic GAN) described with reference to Fig. 8.

Then, the conversion discrimination unit learning unit 152 outputs the conversion unit 191 among the generated conversion unit 191, the conversion discrimination unit 192, the inverse conversion unit 193, and the inverse conversion discrimination unit 194, to the learning set generation unit 153.

In step S14, as described with reference to Fig. 9, the learning set generation unit 153 uses the conversion unit 191 to convert the high-quality input image PA having little influence on the object recognition used for the learning of the object recognition filter RF, into the image PA' similar to the low-quality input image PB used for the learning of the preprocessing filter PF, with high accuracy.

Then, the learning set generation unit 153 outputs the learning set including the pair of the high-quality input image PA and the image PA' similar to the low-quality input image PB used for the learning of the preprocessing filter PF to the evaluation image generation unit 154. Note that the learning set generation unit 153 converts a plurality of different input images PA into images PA', and outputs the learning set including the plurality of input images PA and images PA' to the evaluation image generation unit 154.

In step S15, as described with reference to Fig. 10, the evaluation image generation unit 154 generates the evaluation image PE including the heat map representing an error of the preprocessing filter PF on the basis of the learning set including the pair of the high-quality input image PA and the image PA' similar to the low-quality input image PB used for the learning of the preprocessing filter PF, the preprocessing filter PF, and the object recognition filter RF, and outputs the evaluation image PE to the evaluation filter learning unit 155 together with the image PA' similar to the low-quality input image PB used for the learning of the preprocessing filter PF.

In step S16, as described with reference to Fig. 11, the evaluation filter learning unit 155 obtains the evaluation filter EF by the supervised learning on the basis of the set of the image PA' similar to the low-quality input image PB used for the learning of the preprocessing filter PF and the corresponding evaluation image PE to configure the evaluation filter 133.

With the above processing, it is possible to generate the evaluation filter EF for generating the evaluation image PE for evaluating the object recognition result image PL.

As a result, it is possible to appropriately evaluate the preprocessing filter 131 and the object recognition filter 132 only by applying the obtained evaluation filter to the input image to be input to the preprocessing filter 131, the object recognition filter 132, and the like.

### <Operation control process>

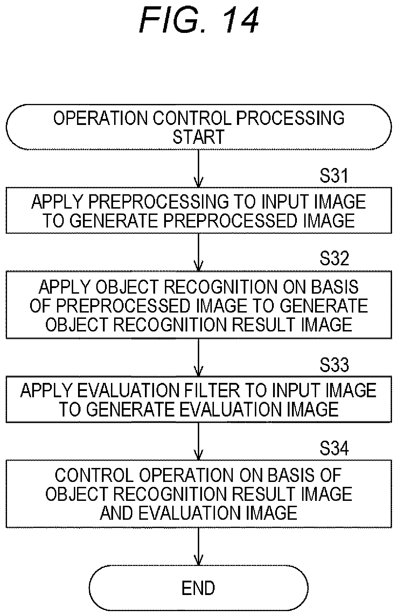

Next, the operation control processing based on the recognition processing by the recognition unit 73 in Fig. 4 using the evaluation filter EF generated by the above-described evaluation filter generation processing as the evaluation filter 133 will be described with reference to the flowchart in Fig. 14.

In step S31, the preprocessing filter 131 corresponding to the preprocessing filter PF performs preprocessing on the input image PI including the low-quality image, converts the input image PI into the high-quality image PC, and outputs the image PC to the object recognition filter 132.

In step S32, the object recognition filter 132 corresponding to the above-described object recognition filter RF performs the object recognition processing on the high-quality image PC, generates the object recognition result image PL, and outputs the object recognition result image PL to the operation control unit 63.

In step S33, the evaluation filter 133 corresponding to the evaluation filter EF generates the evaluation image PE on the basis of the input image PI, and outputs the evaluation image PE to the operation control unit 63.

In step S34, the operation control unit 63 controls the operation of the vehicle 1 on the basis of the object recognition result image PL and the evaluation image PE.

At this time, for example, in the evaluation image PE, in a case where a region in which the pixel value is higher than the predetermined value, the preprocessing is not sufficiently performed by the preprocessing filter 131, and the appropriate object recognition is not performed is larger than a predetermined area, and the object recognition result image PL is regarded to be less reliable than a predetermined level, the operation control unit 63 may not execute the operation control based on the object recognition result image PL, or may stop only the preprocessing filter 131.

Furthermore, in a case where the object recognition result image PL is regarded to be less reliable than the predetermined level, the operation control unit 63 may exchange at least one of the preprocessing filter 131 or the object recognition filter 132 trained by the supervised learning on the basis of other teacher data.

That is, as described above, the conversion unit 191 trained by the cyclic generative adversarial network (Cyclic GAN) converts the image into the corresponding high-quality image according to the type of the low-quality image.

Furthermore, since the evaluation image generation unit 154 generates the evaluation image PE on the basis of the learning set generated by the conversion unit 191 in the learning set generation unit 153, the evaluation image PE to be generated is also different according to the type of the low-quality image.

Moreover, since the evaluation image PE is used to generate the evaluation filter EF in the evaluation filter learning unit 155, naturally, the evaluation filter EF to be generated in the evaluation filter learning unit 155 is also different according to the type of the low-quality image.

Therefore, in the configurations of the preprocessing filter 131, the object recognition filter 132, and the combination of the preprocessing filter 131 and the object recognition filter 132, the appropriate configurations are different according to the type of the low-quality image.

For example, the preprocessing filter 131 is different from a configuration capable of appropriately preprocessing a dark image, which has a low quality for the brightness as the low quality type, and a configuration capable of appropriately preprocessing an image including noise, which has a low quality for noise as the low quality type.

Similarly, the object recognition filter 132 or the combination of the preprocessing filter 131 and the object recognition filter 132 is different from a configuration of appropriately performing the object recognition processing on a dark image, which has a low quality for the brightness as the low quality type, and a configuration of appropriately performing the object recognition processing on an image including noise, which has a low quality for noise as the low quality type.

Therefore, the evaluation filter 133 capable of appropriately evaluating the processing result is also different according to the low quality type.

That is, there is the evaluation filter 133 for the object recognition result image PL for each type of the low-quality image such as a dark image, an image including noise, a cloudy or hazy image, an image with blurring caused by movement, an image with no focus, an image with saturated luminance, or an image with a poor light state in a stormy weather such as heavy rain or snow.

Therefore, for each type of the low-quality image, the operation control unit 63 prepares a plurality of configurations of the preprocessing filter 131, the object recognition filter 132, and the combination of the preprocessing filter 131 and the object recognition filter 132, and the corresponding evaluation filter 133 for each of the plurality of configurations.

Then, the operation control unit 63 may apply a plurality of evaluation filters 133 to the input image PI to obtain the evaluation image PE by each of the evaluation filters 133, and select and use any one of the preprocessing filter 131, the object recognition filter, and the combination of the preprocessing filter 131 and the object recognition filter with the highest evaluation.

At this time, in a case where there are many types of low-quality images and there are many types of evaluation filters 133, one of the plurality of evaluation filters 133 corresponding to the plurality of configurations of the preprocessing filters 131, the object recognition filters 132, and the combinations of the preprocessing filters 131 and the object recognition filters 132 for each type of the low-quality image is limited according to the type of the low-quality image according to the position, the time, and the like, and the evaluation image PE is obtained.

Then, in the obtained evaluation image PE, the preprocessing filter 131, the object recognition filter, and the combination of the preprocessing filter 131 and the object recognition filter corresponding to the evaluation filter 133 having the highest evaluation may be selectively used.

Furthermore, the processing of the evaluation filter 133 may be realized by a server provided outside the vehicle 1. By doing so, even in a case where there are many types of low-quality images and there are many types of evaluation filters 133, the processing of obtaining the evaluation image PE using the evaluation filter 133 is executed by a server or the like provided outside the vehicle 1, so that it is possible to reduce the overall processing load of the recognition unit 73 and increase the processing speed.

Moreover, in the above description, an example has been described in which a plurality of configurations of the preprocessing filters 131, the object recognition filters 132, and the combinations of the preprocessing filters 131 and the object recognition filters 132 according to types, and a plurality of corresponding evaluation filters 133 are prepared according to the types of low-quality images, but a low-quality image in the object recognition can also be regarded as being in accordance with the imaging environment.

That is, the brightness and darkness and the amount of noise in the image are changed according to the imaging environment, and for example, similarly the imaging environment is also changed according to the time and the climate such as the morning, the day, the night, the sunny, the rain, and the snow described above. Moreover, the change according to the season such as spring, summer, autumn, and winter is also regarded as a low-quality image in the recognition. That is, in a case of a recognizer trained by images of a sunny day, the image of a rainy day is regarded as the low-quality image because the color and brightness are different.

Similarly, in the object recognition processing and the like, for example, it can be regarded as the low-quality image due to the difference in a use language, a building style, and the like. That is, for example, in the recognizer trained to recognize an object of a building in an image of Japan, recognizing an object of a building in an image of overseas can be regarded as the low-quality image.

Therefore, similarly to the type of the low-quality image, the operation control unit 63 may prepare a plurality of configurations of the preprocessing filters 131, the object recognition filters 132, and the combinations of the preprocessing filters 131 and the object recognition filters 132, and the corresponding evaluation filter 133 for each of the plurality of configurations, for each source of data, date and time, season, position, country, or the like as the imaging environment that are used for learning, and a combination thereof, and the operation control unit 63 may switch and use the plurality of configurations according to the evaluation based on the evaluation image PE.

Moreover, for example, in the evaluation image PE, the region in which the pixel value is higher than the predetermined value, the preprocessing is not sufficiently performed by the preprocessing filter 131 and the object recognition filter 132, and the appropriate object recognition is not performed, is regarded as a region in which the object recognition processing cannot be sufficiently perform, and the operation control unit 63 may execute the operation control on the basis of the information on a region in which the object recognition processing is sufficiently performed, other than the region in which the pixel value is higher than the predetermined value in the object recognition result image PL.

In either case, the operation control unit 63 can evaluate the object recognition result image PL on the basis of the evaluation image PE, and realize appropriate operation control according to the evaluation result.

Note that, in the above, an example has been described in which the evaluation filter generation unit 134 is configured in the recognition unit 73, and the evaluation filter EF generated by the evaluation filter generation unit 134 is used as the evaluation filter 133.

However, the evaluation filter generation unit 134 may not necessarily be provided in the recognition unit 73, and may be provided separately from the vehicle control system 11 including the recognition unit 73.

In this case, the evaluation filter 133 may be configured such that the evaluation filter EF generated by the evaluation filter generation unit 134 provided separately from the vehicle 1 including the recognition unit 73 is read via the communication network or the like.

Moreover, in the above, an example has been described in which the evaluation image PE is generated by the evaluation filter 133 every time the object recognition processing is performed by the object recognition filter 132, and the object recognition result image PL is evaluated every time. However, in a case where the condition is not changed much, since it is considered that the change of the evaluation image PE is small, the execution frequency may be reduced by executing the evaluation according to the date and time and the position or executing the evaluation at predetermined time intervals.

Here, for example, in a case where the evaluation image PE is generated, and the evaluation score of the object recognition result image PL is obtained and is smaller than the predetermined value, it may be regarded that the preprocessing is insufficiently performed by the preprocessing filter 131, and the processing of the preprocessing filter 131 may be stopped until the evaluation image PE is obtained and the evaluation score is obtained next.

Then, in a case where the evaluation image PE is generated, and the evaluation score of the object recognition result image PL is obtained and is larger than the predetermined value, it may be regarded that the preprocessing is sufficiently performed by the preprocessing filter 131, and the processing of the preprocessing filter 131 may be executed until the evaluation image PE is obtained and the evaluation score is obtained next.

Furthermore, in the above, an example has been described in which the preprocessing filter 131 and the object recognition filter 132 are configured to be obtained by learning, but the preprocessing filter 131 and the object recognition filter 132 may not be configured to be obtained by learning, and a similar evaluation filter may be obtained for various recognizers so that the recognizer may be selectively used according to the evaluation from the evaluation image PE based on the evaluation filter.

### <<5. First modification example>>

In the above, as illustrated in Fig. 10, the evaluation image generation unit 154 applies the preprocessing filter PF to the high-quality input image PA to generate the preprocessed image PC. Then, the evaluation image generation unit 154 applies the object recognition filter RF to the image PC to generate an object recognition result image PLa, and generates, as the evaluation image PE, a heat map in which the difference between pixel values in units of pixels of the object recognition result image PLa and the object recognition result image PLa' obtained on the basis of the low-quality input image PA' is set as the pixel value.

However, in a case where the object recognition result image PLa for the high-quality input image PA is processed by the preprocessing filter PF, ideally, it is expected that the input image PA itself is output.

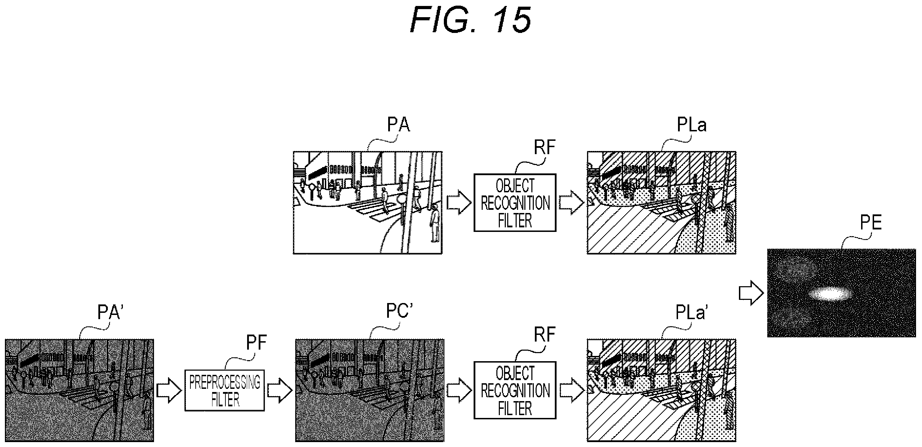

Therefore, in obtaining the evaluation image PE, as illustrated in Fig. 15, the processing for the preprocessing filter PF may be omitted for the high-quality input image PA, and the input image PA may be used as it is instead of the image PC.

### <<6. Second modification example>>

In the above, as illustrated in Fig. 15, an example has been described in which, in obtaining the evaluation image PE, the processing for the preprocessing filter PF is omitted for the high-quality input image PA.

However, a region where the evaluation of the preprocessing filter PF is low is caused by the low-quality input image PA'.

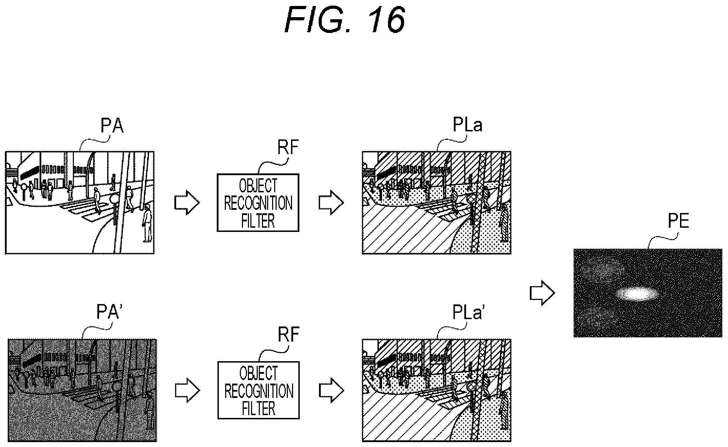

Therefore, as illustrated in Fig. 16, the evaluation image PE may be obtained from the difference between the object recognition result image PLa' directly applied with the object recognition filter RF and the object recognition result image PLa directly applied with the object recognition filter RF, without applying the preprocessing filter PF to the low-quality input image PA' and to the high-quality input image PA.

### <<7. Third modification example>>

In the above, an example has been described in which the recognition unit 73 applies the preprocessing filter 131 to the input image PI to obtain the preprocessed image PC, and applies the object recognition filter 132 to the preprocessed image PC to obtain the object recognition result image PL.

However, since the processing performed on the input image PI in the preprocessing filter 131 is processing performed on a rounded pixel value in the input image PI, there is a difference between the image PI' on which the preprocessing is actually performed and the input image PI.

Therefore, a difference between the image PI' on which the preprocessing is actually performed and the input image PI may be extracted as residual Pr from the input image PI, and is added to the preprocessed image PC to obtain an image PCr, and the image PCr may be applied with the object recognition filter 132.

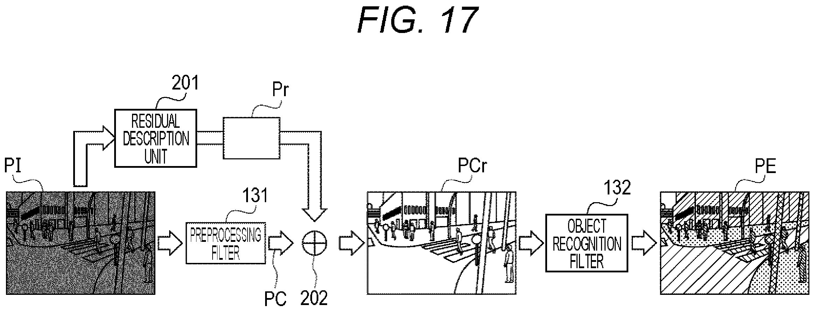

Fig. 17 illustrates a configuration example of the recognition unit 73 in which a difference between the image PI' on which the preprocessing is actually performed and the input image PI is extracted as the residual Pr from the input image PI, and is added to the preprocessed image PC to obtain the image PCr, and the image PCr is applied with the object recognition filter 132.

Note that, in the recognition unit 73 in Fig. 17, the configurations having the same functions as the configurations of the recognition unit 73 in Fig. 4 are denoted by the same reference numerals, and the description thereof will be appropriately omitted.

That is, the recognition unit 73 in Fig. 17 is different from the recognition unit 73 in Fig. 4 in that a residual extraction unit 201 and an addition unit 202 are newly provided.

The residual extraction unit 201 extracts a difference between the image PI' on which the processing is actually performed by the preprocessing filter 131 and the input image PI, as the residual Pr from the input image PI, and outputs the residual Pr to the addition unit 202.

The addition unit 202 generates the image PCr obtained by adding the image PC on which the preprocessing is performed by the preprocessing filter 131 and the residual Pr, and outputs the image PCr to the object recognition filter 132.

With such a configuration, the object recognition filter 132 performs the object recognition processing on the image PCr obtained by adding the image PC on which the preprocessing is performed by the preprocessing filter 131 and the residual Pr, and outputs the object recognition result image PL.

Since the recognition unit 73 having the configuration as illustrated in Fig. 17 extracts the difference between the image PI' on which the preprocessing is actually performed and the input image PI, as the residual Pr from the input image PI, adds the residual Pr to the preprocessed image PC to obtain the image PCr, and applies the object recognition filter 132 to the image PCr, there is no error for the residual Pr, and it is possible to realize the object recognition processing with higher accuracy.

### <<8. Fourth modification example>>

In the above, an example has been described in which the residual extraction unit 201 and the addition unit 202 are provided to the configuration of the recognition unit 73, and the object recognition filter 132 performs the object recognition processing on the image PCr obtained by adding the image PC on which the preprocessing is performed by the preprocessing filter 131 and the residual Pr, and outputs the object recognition result image PL.

Therefore, also in the processing of the evaluation image generation unit 154, after the residual is extracted from the input image and added to the preprocessed image, a heat map representing the error of the preprocessing filter PF may be generated as the evaluation image PE.

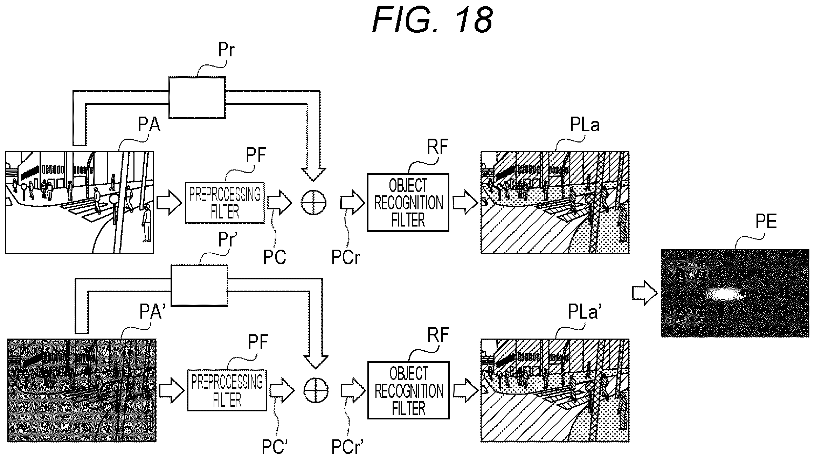

That is, as illustrated in Fig. 18, the evaluation image generation unit 154 extracts the residual Pr from the high-quality input image PA, applies the preprocessing filter PF to the high-quality input image PA to generate the preprocessed image PC, and adds the extracted residual Pr to the image PC to generate the image PCr.

Furthermore, the evaluation image generation unit 154 extracts residual Pr' from the low-quality input image PA', applies the preprocessing filter PF to the low-quality input image PA' to generate the preprocessed image PC', and adds the extracted residual Pr' to the image PC' to generate an image PCr'. Then, the evaluation image generation unit 154 applies the object recognition filter RF to the image PCr' to generate the object recognition result image PLa'.

Then, the evaluation image generation unit 154 generates, as the evaluation image PE, a heat map in which the difference between pixel values in units of pixels of the object recognition result image PLa obtained on the basis of the high-quality input image PA and the object recognition result image PLa' obtained on the basis of the low-quality input image PA' is set as the pixel value.

### <<9. Fifth modification example>>

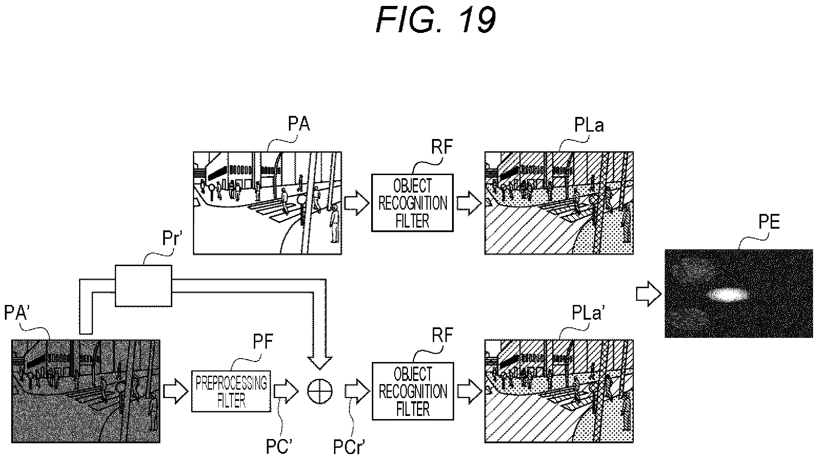

Furthermore, an example has been described in which the evaluation image PE is obtained in a manner that the residual is obtained, the preprocessing is performed, and then the residual is added. Moreover, similar to the first modification example described with reference to Fig. 15, in obtaining the evaluation image PE, the processing for the preprocessing filter PF may be omitted for the high-quality input image PA as illustrated in Fig. 19.

### <<10. Example executed by software>>

Meanwhile, the above-described series of processing can be executed by hardware, but can also be executed by software. In a case where the series of processing is executed by software, a program constituting the software is installed from a recording medium to a computer incorporated in dedicated hardware or, for example, a general-purpose computer or the like capable of executing various functions by installing various programs.

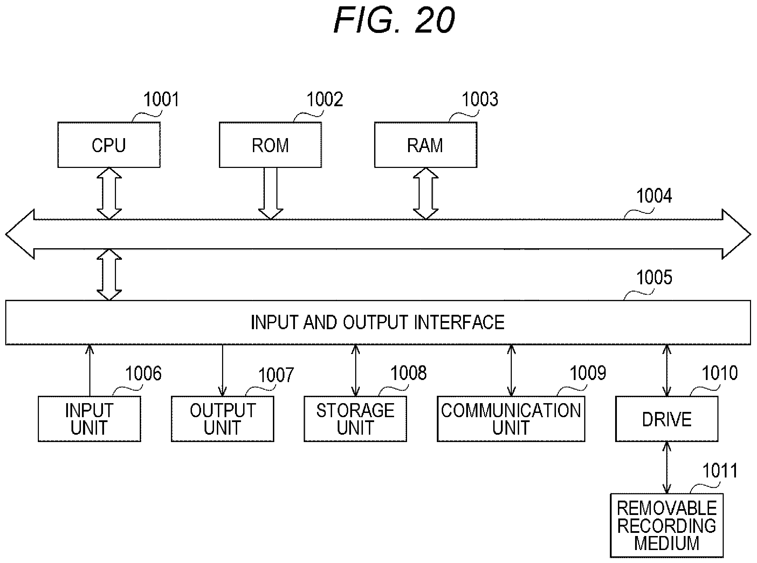

Fig. 20 illustrates a configuration example of a general-purpose computer. A personal computer includes a central processing unit (CPU) 1001. An input and output interface 1005 is connected to the CPU 1001 via a bus 1004. A read only memory (ROM) 1002 and a random access memory (RAM) 1003 are connected to the bus 1004.

The input and output interface 1005 is connected with an input unit 1006 including an input device such as a keyboard or a mouse with which a user inputs an operation command, an output unit 1007 that outputs a processing operation screen or an image of a processing result to a display device, a storage unit 1008 including a hard disk drive or the like that stores programs or various kinds of data, and a communication unit 1009 that includes a local area network (LAN) adapter or the like and executes communication processing via a network represented by the Internet. Furthermore, a drive 1010 that reads and writes data from and to a removable storage medium 1011 such as a magnetic disk (including a flexible disk), an optical disk (including a compact disc-read only memory (CD-ROM) and a digital versatile disc (DVD)), a magneto-optical disk (including a mini disc (MD)), or a semiconductor memory is connected.

The CPU 1001 executes various kinds of processing according to a program stored in the ROM 1002 or a program that is read from the removable storage medium 1011 such as a magnetic disk, an optical disk, a magneto-optical disk, or a semiconductor memory, is installed in the storage unit 1008, and is loaded from the storage unit 1008 to the RAM 1003. Furthermore, data and the like required for the CPU 1001 to execute various kinds of processing are appropriately stored in the RAM 1003.

In the computer configured as described above, for example, the CPU 1001 loads a program stored in the storage unit 1008 into the RAM 1003 via the input and output interface 1005 and the bus 1004 and executes the program, and thereby the above-described series of processing is performed.

The program executed by the computer (CPU 1001) can be provided by being recorded in the removable storage medium 1011 as a package medium or the like, for example. Furthermore, the program can be provided via a wired or wireless transmission medium such as a local area network, the Internet, or digital satellite broadcasting.

In the computer, the program can be installed in the storage unit 1008 via the input and output interface 1005 by mounting the removable storage medium 1011 to the drive 1010. Furthermore, the program can be installed in the storage unit 1008 by being received by the communication unit 1009 via a wired or wireless transmission medium. In addition, the program can be installed in the ROM 1002 or the storage unit 1008 in advance.

Note that the program executed by the computer may be a program in which processing is performed in time series in the order described in the present specification, or may be a program in which processing is performed in parallel or at necessary timing such as when a call is made.

Note that the CPU 1001 in Fig. 20 realizes the functions of the recognition unit 73 in Fig. 1.

Furthermore, in the present specification, a system means a set of a plurality of components (devices, modules (parts), and the like) and it does not matter whether or not all the components are in the same housing. Therefore, a plurality of devices that is housed in separate housings and connected via a network, and one device in which a plurality of modules is housed in one housing are both systems.

Note that the embodiments of the present disclosure are not limited to the above-described embodiments, and various modifications can be made without departing from the gist of the present disclosure.

For example, the present disclosure can have a configuration of cloud computing in which one function is shared and processed in cooperation by a plurality of devices via a network.

Furthermore, each step described in the above-described flowcharts can be executed by one device or can be shared and executed by a plurality of devices.

Moreover, in a case where a plurality of kinds of processing is included in one step, the plurality of kinds of processing included in the one step can be executed by one device or can be shared and executed by a plurality of devices.

Note that the present disclosure can also have the following configurations.
<1> An information processing apparatus including:
   a recognition unit that recognizes an object in an input image; and
   an evaluation unit that evaluates the recognition unit.
<2> The information processing apparatus described in <1>, further including:
   a conversion unit that lowers a quality of the input image to convert the input image into a low-quality image.
<3> The information processing apparatus described in <2>,
   in which the conversion unit is generated by unsupervised learning.
<4> The information processing apparatus described in <3>,
   in which the unsupervised learning is learning using a cyclic generative adversarial network (Cyclic GAN) .
<5> The information processing apparatus described in <2>, further including:
   an evaluation unit generation unit that generates the evaluation unit on the basis of a recognition result for the input image by the recognition unit and a recognition result for the low-quality image by the recognition unit.
<6> The information processing apparatus described in <5>, further including:
   an evaluation image generation unit that generates an evaluation image including a difference between pixel values of a recognition result image that is the recognition result for the input image by the recognition unit, and a recognition result image that is the recognition result for the low-quality image by the recognition unit,
   in which the evaluation unit generation unit generates the evaluation unit on the basis of supervised learning using the evaluation image and the input image.
<7> The information processing apparatus described in <6>, further including:
   a preprocessing unit that performs preprocessing of increasing a quality of an image to perform correction,
   in which the recognition unit recognizes an object in a correction input image obtained by correcting the input image by the preprocessing unit.
<8> The information processing apparatus described in <7>,
   in which the evaluation image generation unit generates the evaluation image including a difference between the recognition result image that is the recognition result for a correction input image, which is obtained by increasing a quality of the input image and correcting the input image by the preprocessing unit, by the recognition unit, and the recognition result image that is the recognition result for a correction low-quality image, which is obtained by increasing a quality of the low-quality image and correcting the low-quality image by the preprocessing unit, by the recognition unit.
<9> The information processing apparatus described in <7>,
   in which the evaluation image generation unit generates the evaluation image including a difference between the recognition result image that is the recognition result for the input image by the recognition unit, and the recognition result image that is the recognition result for a correction image, which is obtained by increasing a quality of the low-quality image and correcting the low-quality image by the preprocessing unit, by the recognition unit.
<10> The information processing apparatus described in <7>, further including:
   a residual extraction unit that extracts a residual relating to the preprocessing from an image on which the preprocessing is performed by the preprocessing unit; and
   an addition unit that adds the residual to the image on which the preprocessing is performed by the preprocessing unit,
   in which the recognition unit recognizes an object in a residual added correction input image obtained by adding the residual to the correction input image obtained by correcting the input image by the preprocessing unit.
<11> The information processing apparatus described in <10>,
   in which the evaluation image generation unit generates the evaluation image including a difference between the recognition result image that is the recognition result for the residual added correction input image obtained by adding the residual to the correction input image obtained by increasing a quality of the input image and correcting the input image by the preprocessing unit, by the recognition unit, and the recognition result image that is the recognition result for a residual added correction low-quality image obtained by adding the residual to the correction low-quality image obtained by increasing a quality of the low-quality image and correcting the low-quality image by the preprocessing unit, by the recognition unit.
<12> The information processing apparatus described in <10>,
   in which the evaluation image generation unit generates the evaluation image including a difference between the recognition result image that is the recognition result for the input image by the recognition unit, and the recognition result image that is the recognition result for a residual added correction low-quality image obtained by adding the residual to the correction low-quality image obtained by increasing a quality of the low-quality image and correcting the low-quality image by the preprocessing unit, by the recognition unit.
<13> The information processing apparatus described in <7>,
   in which in a case where the evaluation of the recognition unit by the evaluation unit is lower than a predetermined value, the preprocessing unit stops the preprocessing, and outputs the input image to a subsequent stage in an unprocessed state.
<14> The information processing apparatus described in any one of <1> to <13>,
   in which the evaluation unit evaluates the recognition unit at a frequency lower than a frequency at which the recognition unit recognizes an object in the input image.
<15> The information processing apparatus described in <14>,
   in which the evaluation unit evaluates the recognition unit in a case where any of a predetermined time interval, a predetermined time, and a predetermined position, or a combination of the predetermined time interval, the predetermined time, and the predetermined position satisfies a predetermined condition.
<16> The information processing apparatus described in any one of <1> to <15>,
   in which there is a plurality of the recognition units, and the plurality of recognition units recognizes the object in the input image according to different imaging environments,
   there is a plurality of the evaluation units corresponding to the plurality of recognition units, and the plurality of evaluation units respectively evaluates the corresponding recognition units, and
   the information processing apparatus further includes a selection unit that selects any one among the plurality of recognition units on the basis of an evaluation result for each of the plurality of recognition units by the plurality of evaluation units.
<17> The information processing apparatus described in <16>,
   in which the imaging environment is the imaging environment according to a time, a season, and a position at which the input image is imaged.
<18> An information processing method of an information processing apparatus including a recognition unit that recognizes an object in an input image, and an evaluation unit that evaluates the recognition unit,
   in which the information processing method includes steps for the evaluation unit to evaluate the recognition unit.
<19> A program causing a computer to function as:
   a recognition unit that recognizes an object in an input image; and
   an evaluation unit that evaluates the recognition unit.
<20> An information processing system including:
   a recognition unit that recognizes an object in an input image; and
   an evaluation unit that evaluates the recognition unit.

### REFERENCE SIGNS LIST

- 73: Recognition unit
- 131: Preprocessing filter
- 132: Object recognition filter
- 133: Evaluation filter
- 134: Evaluation filter generation unit
- 151: Filter learning unit
- 152: Conversion discrimination learning unit
- 153: Learning set
- 154: Evaluation image generation unit
- 155: Evaluation filter learning unit
- 171: Object recognition filter learning unit
- 172: Preprocessing filter learning unit
- 191: Conversion unit
- 192: Conversion discrimination unit
- 193: Inverse conversion unit
- 194: Inverse conversion discrimination unit

## Claims

1. An information processing apparatus comprising:
a recognition unit that recognizes an object in an input image; and
an evaluation unit that evaluates the recognition unit.

2. The information processing apparatus according to claim 1, further comprising:
a conversion unit that lowers a quality of the input image to convert the input image into a low-quality image.

3. The information processing apparatus according to claim 2,
wherein the conversion unit is generated by unsupervised learning.

4. The information processing apparatus according to claim 3,
wherein the unsupervised learning is learning using a cyclic generative adversarial network (Cyclic GAN).

5. The information processing apparatus according to claim 2, further comprising:
an evaluation unit generation unit that generates the evaluation unit on a basis of a recognition result for the input image by the recognition unit and a recognition result for the low-quality image by the recognition unit.

6. The information processing apparatus according to claim 5, further comprising:
an evaluation image generation unit that generates an evaluation image including a difference between pixel values of a recognition result image that is the recognition result for the input image by the recognition unit, and a recognition result image that is the recognition result for the low-quality image by the recognition unit,
wherein the evaluation unit generation unit generates the evaluation unit on a basis of supervised learning using the evaluation image and the input image.

7. The information processing apparatus according to claim 6, further comprising:
a preprocessing unit that performs preprocessing of increasing a quality of an image to perform correction,
wherein the recognition unit recognizes an object in a correction input image obtained by correcting the input image by the preprocessing unit.

8. The information processing apparatus according to claim 7,
wherein the evaluation image generation unit generates the evaluation image including a difference between the recognition result image that is the recognition result for a correction input image, which is obtained by increasing a quality of the input image and correcting the input image by the preprocessing unit, by the recognition unit, and the recognition result image that is the recognition result for a correction low-quality image, which is obtained by increasing a quality of the low-quality image and correcting the low-quality image by the preprocessing unit, by the recognition unit.

9. The information processing apparatus according to claim 7,
wherein the evaluation image generation unit generates the evaluation image including a difference between the recognition result image that is the recognition result for the input image by the recognition unit, and the recognition result image that is the recognition result for a correction image, which is obtained by increasing a quality of the low-quality image and correcting the low-quality image by the preprocessing unit, by the recognition unit.

10. The information processing apparatus according to claim 7, further comprising:
a residual extraction unit that extracts a residual relating to the preprocessing from an image on which the preprocessing is performed by the preprocessing unit; and
an addition unit that adds the residual to the image on which the preprocessing is performed by the preprocessing unit,
wherein the recognition unit recognizes an object in a residual added correction input image obtained by adding the residual to the correction input image obtained by correcting the input image by the preprocessing unit.

11. The information processing apparatus according to claim 10,
wherein the evaluation image generation unit generates the evaluation image including a difference between
the recognition result image that is the recognition result for the residual added correction input image obtained by adding the residual to the correction input image obtained by increasing a quality of the input image and correcting the input image by the preprocessing unit, by the recognition unit, and the recognition result image that is the recognition result for a residual added correction low-quality image obtained by adding the residual to the correction low-quality image obtained by increasing a quality of the low-quality image and correcting the low-quality image by the preprocessing unit, by the recognition unit.

12. The information processing apparatus according to claim 10,
wherein the evaluation image generation unit generates the evaluation image including a difference between the recognition result image that is the recognition result for the input image by the recognition unit, and the recognition result image that is the recognition result for a residual added correction low-quality image obtained by adding the residual to the correction low-quality image obtained by increasing a quality of the low-quality image and correcting the low-quality image by the preprocessing unit, by the recognition unit.

13. The information processing apparatus according to claim 7,
wherein in a case where the evaluation of the recognition unit by the evaluation unit is lower than a predetermined value, the preprocessing unit stops the preprocessing, and outputs the input image to a subsequent stage in an unprocessed state.

14. The information processing apparatus according to claim 1,
wherein the evaluation unit evaluates the recognition unit at a frequency lower than a frequency at which the recognition unit recognizes an object in the input image.

15. The information processing apparatus according to claim 14,
wherein the evaluation unit evaluates the recognition unit in a case where any of a predetermined time interval, a predetermined time, and a predetermined position, or a combination of the predetermined time interval, the predetermined time, and the predetermined position satisfies a predetermined condition.

16. The information processing apparatus according to claim 1,
wherein there is a plurality of the recognition units, and the plurality of recognition units recognizes the object in the input image according to different imaging environments,
there is a plurality of the evaluation units corresponding to the plurality of recognition units, and the plurality of evaluation units respectively evaluates the corresponding recognition units, and
the information processing apparatus further includes a selection unit that selects any one among the plurality of recognition units on a basis of an evaluation result for each of the plurality of recognition units by the plurality of evaluation units.

17. The information processing apparatus according to claim 16,
wherein the imaging environment is the imaging environment according to a time, a season, and a position at which the input image is imaged.

18. An information processing method of an information processing apparatus including a recognition unit that recognizes an object in an input image, and an evaluation unit that evaluates the recognition unit,
wherein the information processing method includes steps for the evaluation unit to evaluate the recognition unit.

19. A program causing a computer to function as:
a recognition unit that recognizes an object in an input image; and
an evaluation unit that evaluates the recognition unit.

20. An information processing system comprising:
a recognition unit that recognizes an object in an input image; and
an evaluation unit that evaluates the recognition unit.
